# EUROPÄISCHE PATENTSCHRIFT

(11) **EP 2 459 579 B1**
(45) Veröffentlichungstag und Bekanntmachung des Hinweises auf die Patenterteilung: **27.11.2013**
(21) Anmeldenummer: 10736742.7
(22) Anmeldetag: 30.07.2010
(51) Int. Cl.: C07F 9/6506, C07F 15/00, C07F 15/04, C07B 37/02, C07B 53/00

(54) **IMIDAZOLGRUPPENHALTIGE PHOSPHINOBORAN-VERBINDUNGEN UND VERFAHREN ZUR HERSTELLUNG VON IMIDAZOLGRUPPENHALTIGE PHOSPHORVERBINDUNGEN**
PHOSPHINE BORANE COMPOUNDS COMPRISING IMIDAZOL GROUPS AND METHOD FOR PRODUCING PHOSPHINE BORANE COMPOUNDS COMPRISING IMIDAZOL GROUPS
COMPOSÉS PHOSPHINE-BORANE CONTENANT DES GROUPES IMIDAZOLE ET PROCÉDÉ DE PRODUCTION DE COMPOSÉS PHOSPHORÉS CONTENANT DES GROUPES IMIDAZOLE

(30) Priorität: 31.07.2009 EP 09166945
(43) Veröffentlichungstag der Anmeldung: 06.06.2012
(73) Patentinhaber: BASF SE, 67056 Ludwigshafen (DE)
(72) Erfinder: JÄKEL, Christoph, 67117 Limburgerhof (DE); HOFMANN, Peter, 69118 Heidelberg (DE); SCRIBAN, Corina, CB4 1XQ Cambridge (GB); HANNO-IGELS, Patrick, 69118 Heidelberg (DE)
(86) Internationale Anmeldenummer: PCT/EP2010/061075
(87) Internationale Veröffentlichungsnummer: WO 2011/012687

(56) Entgegenhaltungen:
- WO-A1-2009/101162
- NANCHEN STEVE ET AL: "Chiral phosphino- and (phosphinooxy)-substituted N-heterocyclic carbene ligands and their application in iridium-catalyzed asymmetric hydrogenation", HELVETICA CHIMICA ACTA, VERLAG HELVETICA CHIMICA ACTA, BASEL, CH, Bd. 89, Nr. 8, 1. Januar 2006 (2006-01-01) , Seiten 1559-1573, XP002524019, ISSN: 0018-019X, DOI: DOI:10.1002/HLCA.200690157
- IMAMOTO T ET AL: "P-Chiral Bis(trialkylphosphine) Ligands and Their Use in Highly Enantioselective Hydrogenation Reactions", JOURNAL OF THE AMERICAN CHEMICAL SOCIETY, AMERICAN CHEMICAL SOCIETY, US, Bd. 120, 1. Januar 1998 (1998-01-01), Seiten 1635-1636, XP002524067, ISSN: 0002-7863, DOI: DOI:10.1021/JA973423I [gefunden am 1998-02-06]

## Beschreibung

Die vorliegende Erfindung betrifft imidazolgruppenhaltige Phosphinoboranverbindungen, unter Verwendung dieser, hergestellte optisch aktive Liganden, Übergangsmetallkomplexe, die solche Liganden enthalten, und Katalysatoren, die solche Übergangsmetallkomplexe umfassen. Ferner betrifft die vorliegende Erfindung die jeweiligen Verfahren zur Herstellung der Phosphinoboranverbindungen, der optisch aktiven Liganden, der Übergangsmetallkomplexe und der Katalysatoren, sowie die Verwendung der Katalysatoren für organische Transformationsreaktionen. Des weiteren betrifft die vorliegende Erfindung ein Verfahren zur Herstellung von optisch aktiven Liganden enthaltend imidazolgruppenhaltige Phosphorverbindungen unter Verwendung von imidazolgruppenhaltige Phosphinoboranverbindungen.

Organische Transformationsreaktionen, beispielsweise asymmetrische Hydrierungen, Hydroformylierungen oder Polymerisationen, stellen wichtige Reaktionen in der chemischen Großindustrie dar. Diese organischen Transformationsreaktionen werden vorwiegend homogen katalysiert.

Um Katalysatoren mit hoher Aktivität und Enantioselektivität zu erhalten, müssen häufig aufwändige, mehr-stufige und somit kostenintensive Synthesen durchgeführt werden. Meist stellen dabei die Synthesen der Liganden, durch die die Reaktivität der Metallkomplexe maßgeschneidert werden kann, den schwierigsten Schritt dar. Die Suche nach Liganden, die auf leicht zugänglichen Ausgangsmaterial beruhen und/oder durch ein einfaches Syntheseverfahren herstellbar sind, ist folglich eine permanente Aufgabe bei der Kostenreduzierung in der chemischen Katalyse.

Um beispielsweise die Stereoselektivität bei einer asymmetrischen Hydrierung oder die Taktizität bei einer Polymerisation steuern zu können, werden chirale Liganden benötigt. Ein Ausgangsgerüst für chirale Liganden könnten NHCP-Liganden darstellen, die durch ein sterisch geschütztes Phosphoratom und ein Carben als starken σ-Donor Potential in sich bergen.

Trotz dieser Ausgangsbasis wurden im Stand der Technik bislang nur achirale und einzelne chirale NHCP-Liganden offenbart. In Organometallics 2007, Volume 26, Seiten 253 bis 263, in Chemistry - A European Journal 2007, Volume 13, Seiten 3652 bis 3659, im Journal of Organometallic Chemistry 2005, Volume 690, Seiten 5948 bis 5958 und in Organometallics 2003, Volume 22, Seiten 4750 bis 4758, werden z. B. achirale NHCP-Liganden des folgenden Typs beschrieben: 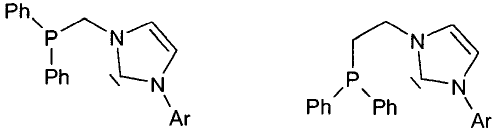 wobei "Ph" für Phenyl und "Ar" für 2,6-Diisopropylphenyl oder 2,4,6-Trimethylphenyl steht.
Anwendungen dieser Systeme in katalytischen Transformationen sind in Organic Letters 2001, Volume 3, Seiten 1511 bis 1514, Advanced Synthesis & Catalysis 2004, Volume 346, Seiten 595 bis 598, Inorganica Chimica Acta 2004, Volume 357, Seiten 4313 bis 4321, Journal of Organometallic Chemistry 2006, Volume 691, Seiten 433 bis 443, und Organometallics 2005, Volume 24, Seiten 4241 bis 4250, beschrieben.

Chirale NHCP-Liganden wurden bisher nur vereinzelt beschrieben, so werden im Stand der Technik ((a) S. Nanchen, A. Pfaltz // Helvetica Chimica Acta 89 (2006) 1559-1573, (b) E. Bappert, G. Heimchen // Synlett 10 (2004) 1789-1793, (c) H. Lang, J. Vittal, P-H. Leung // Journal of the Chemical Society, Dalton Transactions (1998) 2109-2110) Liganden offenbart, die sich durch eine Ethano-Brücke zwischen dem P-Atom und dem N-Atom des Imidazolgruppenelement auszeichnen. Weitere NHCP-Liganden wurden in folgender Literatur beschrieben ((a) H Seo, H. Park, B. Y. Kim, J. H. Lee, S. U. Son, Y. K. Chung // Organometallics (22) 2003, 618-620, (b) T. Focken, G. Raabe, C. Bolm // Tetrahedron: Asymmetry 15 (2004) 1693-1706, (c) T. Focken, J. Rudolph, C. Bolm // Synthesis (2005) 429-436, (d) R. Hodgson, R. E. Douthwaite // Journal of Organometallic Chemistry 690 (2005) 5822-5831). Auch in diesem Fall wurde eine relativ lange Brücken zwischen dem P-Atom und einem N-Atom des Imidazolgruppenelements gewählt. Alle bisher beschriebenen chiralen NHCP-Liganden zeigen allerdings nur mäßige Enantioselektivitäten.

Achirale NHCP-Liganden haben üblicherweise zwei identische Substituenten am Phosphoratom. Chirale NHCP-Liganden hingegen können am Phosphoratom verschiedene Liganden besitzen. Ist dies der Fall, dann wird das Phosphoatom selbst ein chirales Zentrum. Diese chiralen Verbindungen eignen sich besonders vorteilhaft als Liganden für Katalysatoren in der enantioselektiven Katalyse, z. B. enantioselektive Hydrierungen. Für eine enantioselektive Katalyse können im Wesentlichen nur solche chirale Verbindungen eingesetzt werden, die weitgehend enantiomerenrein, d.h. nur in Form eines Enantiomers, vorliegen.

Leider können die durch einen Austausch der symmetrischen Substituenten am Phosphoratom hergestellten Verbindungen, die nun ein chirales Phosphoratom aufweisen, nicht für die enantioselektive Katalyse genutzen werden, da diese nach der konventionellen Synthese entstehenden Verbindungen beide enantiomeren Formen der Liganden in gleicher Menge, als Racemat, aufweisen würden.

Femerfinden sich im Stand der Technik (WO 03/022812 A1; WO 2006/087333 A1; WO 03/037835 A2; EP 1 182 196 A1) folgende Imidazolium-Kationen aufweisende ionische Flüssigkeiten nachstehender Formel, die allerdings keine NHCP-Kombinationen umfassen: 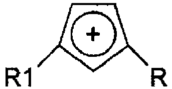 wobei der Rest R1 ausgewählt ist aus der Gruppe bestehend aus a) Wasserstoff, b) linearen oder verzweigten, gesättigten oder ungesättigten, aliphatischen oder alicyclischen Alkylgruppen mit 1 bis 20 Kohlenstoffatomen, c) Heteroaryl-, Heteroaryl-C₁-C₆-Alkylgruppen mit 3 bis 8 Kohlenstoffatomen im Heteroarylrest und wenigstens einem Heteroatom ausgewählt aus N, O und S, der mit wenigstens einer Gruppe ausgewählt aus C₁-C₆-Alkylgruppen und/oder Halogenatomen substituiert sein können, d) Aryl-, Aryl- C₁-C₆-Alkylgruppen mit 5 bis 16 Kohlenstoffatomen im Arylrest, die gegebenenfalles mit wenigstens einer C₁-C₆-Alkylgruppe und/oder einem Halogenatomen substituiert sein können und der Rest R ausgewählt ist aus der Gruppe bestehend aus a) linearen oder verzweigten, gesättigten oder ungesättigten, aliphatischen oder alicyclischen Alkylgruppen mit 1 bis 20 Kohlenstoffatomen, b) Heteroaryl-C₁-C₆-Alkylgruppen mit 3 bis 8 Kohlenstoffatomen im Heteroarylrest und wenigstens einem Heteroatom ausgewählt aus N, O und S, der mit wenigstens einer Gruppe ausgewählt aus C₁-C₆-Alkylgruppen und/oder Halogenatomen substituiert sein können, c) Aryl- C₁-C₆-Alkylgruppen mit 5 bis 16 Kohlenstoffatomen im Arylrest, die gegebenenfalls mit wenigstens einer C₁-C₆-Alkylgruppe und/oder einem Halogenatomen substituiert sein können.

In den genannten Dokumenten werden verschiedene Herstellweisen für die beschriebenen ionischen Flüssigkeiten offenbart. Ferner wird beschrieben, dass die ionischen Flüssigkeiten als Lösemittel, als Phasentransferkatalysatoren, als Extraktionsmittel, als Wärmeträger, als Betriebsflüssigkeit in Prozess- bzw. Arbeitsmaschinen oder als Extraktionsmedium oder als Bestandteil des Reaktionsmediums für Extraktionen von polarisierbaren Verunreinigungen/Substraten eingesetzt werden.

Die internationale Patentanmeldung WO 2009/101162 beschreibt imidazolgruppenhaltige Phosphorverbindungen, daraus hergestellte Liganden, Übergangsmetallkomplexe und Katalysatoren mit der folgenden Formel: 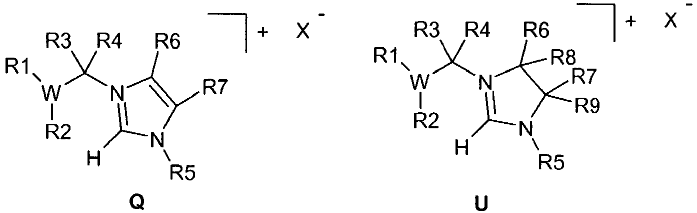 worin W für Phosphor oder Phosphit steht.

Der vorliegenden Erfindung liegt demnach die Aufgabe zugrunde, neue optisch aktive Liganden und darauf basierende Katalysatoren zur Verfügung zu stellen. Diese Liganden sollen mit industriell kostengünstig verfügbaren Ausgangsstoffen und Reagenzien und ohne erheblichen apparativen Aufwand synthetisierbar sein. Bevorzugt sollen sich die Liganden oder der Katalysator in einem Ein-Stufen-Verfahren herstellen lassen. Insbesondere sollen beide Enantiomere der jeweiligen Liganden mit ähnlicher Effizienz herstellbar sein. Weiterhin sollen sich die Liganden, bzw. die hieraus hergestellten Katalysatoren, für den Einsatz in organischen Transformationsreaktionen mit hoher Stereoselektivität und/oder guter Regioselektivität eignen. Darüber hinaus sollen die organischen Transformationsreaktionen eine zum Stand der Technik vergleichbare Ausbeute aufweisen.

Überraschend wurde gefunden, dass die aus den im Folgenden näher charakterisierten NHCP-Liganden hergestellten Katalysatoren eine im Vergleich zum Stand der Technik gute Effizienz bei deutlich geringeren Synthesekosten aufweisen. Die NHCP-Liganden sind nicht nur einfach und kostengünstig herstellbar, sie sind ferner auch äußerst robust. Weiterhin lassen sich sogar beide Enantiomere mit geringem Aufwand herstellen.

Das erfindungsgemäße Verfahren erlaubt die Synthese chiraler Verbindungen mit unterschiedlichen Mengen der beiden Enantiomere. Insbesondere erlaubt das erfindungsgemäße Verfahren eine Differenzierung dieser Enantiomere in einem Maße, dass die Bildung des unerwünschten Enantiomers so weitgehend unterdrückt wird, dass dieses nur noch einen zu vernachlässigen Einfluss in der synthetischen Anwendung aufweist.

Für den Zweck der Erläuterung der vorliegenden Erfindung umfasst der Ausdruck "Alkyl" geradkettige und verzweigte Alkylgruppen. Vorzugsweise handelt es sich dabei um geradkettige oder verzweigte C₁-C₂₀-Alkyl, bevorzugterweise C₁-C₁₂-Alkyl-, besonders bevorzugt C₁-C₈-Alkyl- und ganz besonders bevorzugt C₁-C₄-Alkylgruppen. Beispiele für Alkylgruppen sind insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl, n-Octyl, 2-Ethylhexyl, 2-Propylheptyl, Nonyl, Decyl.

Der Ausdruck "Alkyl" umfasst auch substituierte Alkylgruppen, welche im Allgemeinen 1, 2, 3, 4 oder 5, bevorzugt 1, 2 oder 3 und besonders bevorzugt 1 Substituenten aufweisen. Diese sind vorzugsweise ausgewählt unter Alkoxy, Cycloalkyl, Aryl, Hetaryl, Hydroxyl, Halogen, NE¹E², NE¹E²E³⁺, Carboxylat und Sulfonat. Eine bevorzugte Perfluoralkylgruppe ist Trifluormethyl.

Der Ausdruck "Aryl" umfasst im Sinne der vorliegenden Erfindung unsubstituierte als auch substituierte Arylgruppen, und steht vorzugsweise für Phenyl, Tolyl, Xylyl, Mesityl, Naphthyl, Fluorenyl, Anthracenyl, Phenanthrenyl oder Naphthacenyl, besonders bevorzugt für Phenyl oder Naphthyl, wobei diese Arylgruppen im Falle einer Substitution im Allgemeinen 1, 2, 3, 4 oder 5, vorzugsweise 1, 2 oder 3 und besonders bevorzugt 1 Substituenten, ausgewählt aus den Gruppen Alkyl, Alkoxy, Carboxylat, Trifluormethyl, Sulfonat, NE¹E², Alkylen-NE¹E², Nitro, Cyano oder Halogen, tragen können. Eine bevorzugte Perfluorarylgruppe ist Pentafluorphenyl.

Carboxylat und Sulfonat stehen im Rahmen dieser Erfindung vorzugsweise für ein Derivat einer Carbonsäurefunktion bzw. einer Sulfonsäurefunktion, insbesondere für ein Metallcarboxylat oder -sulfonat, eine Carbonsäureester- oder Sulfonsäureesterfunktion oder eine Carbonsäure- oder Sulfonsäureamidfunktion. Dazu zählen z. B. die Ester mit C₁-C₄-Alkanolen, wie Methanol, Ethanol, n-Propanol, Isopropanol, n-Butanol, sec.-Butanol und tert.-Butanol.

Die obigen Erläuterungen zu den Ausdrücken "Alkyl" und "Aryl" gelten entsprechend für die Ausdrücke "Alkoxy" und "Aryloxy".

Der Ausdruck "Acyl" steht im Sinne der vorliegenden Erfindung für Alkanoyl- oder Aroylgruppen mit im Allgemeinen 2 bis 11, vorzugsweise 2 bis 8 Kohlenstoffatomen, beispielsweise für die Formyl-, Acetyl-, Propanoyl-, Butanoyl-, Pentanoyl-, Hexanoyl-, Heptanoyl-, 2-Ethylhexanoyl-, 2-Propylheptanoyl-, Benzoyl- oder Naphthoyl-Gruppe.

Die Reste E¹ bis E³ sind unabhängig voneinander ausgewählt unter Wasserstoff, Alkyl, Cycloalkyl und Aryl. Die Gruppe NE¹E² steht vorzugsweise für N,N-Dimethylamino, N,N-Diethylamino, N,N-Dipropylamino, N,N-Diisopropylamino, N,N-Di-n-butylamino, N,N-Di-t.-butylamino, N,N-Dicyclohexylamino oder N,N-Diphenylamino.

Halogen steht für Fluor, Chlor, Brom und lod, bevorzugt für Fluor, Chlor und Brom.

Im beschreibenden Teil der vorliegenden Patentanmeldung sind zur Vereinfachung auch bei der Nennung nur eines Enantiomers beide Enantiomere umfasst.

Gegenstand der Erfindung sind imidazolgruppenhaltige Phosphinoboranverbindungen der allgemeinen Formel I oder II: 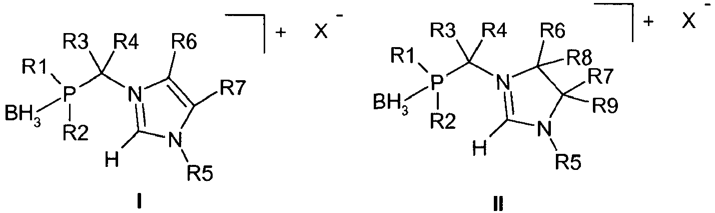 worin
R1 und R2 für verschiedene Reste stehen und ausgewählt sind aus der Gruppe bestehend aus Alkyl und Alkyl (Variante α)
oder
R1 und R2 für verschiedene Reste stehen und ausgewählt sind aus der Gruppe bestehend aus Alkyl und Aryl (Variante β),
R3 und R4 jeweils für gleiche oder verschiedene Reste stehen ausgewählt aus der Gruppe bestehend aus Wasserstoff, Alkyl und Aryl,
R5 für Alkyl oder Aryl steht,
R6 und R7 jeweils für gleiche oder verschiedene Reste stehen ausgewählt aus der Gruppe bestehend aus Wasserstoff, Alkyl, Aryl und einem 6-gliedrigen aliphatischen oder aromatischen Ring,
R8 und R9 unabhängig voneinander für Wasserstoff oder Alkyl stehen,
X für eine Abgangsgruppe steht ausgewählt aus Chlor, Brom, Iod, Trifluoracetyl, Acetyl, Benzoyl, Tosyl, Nosyl, Triflat, Nonaflat, campher-10-sulfonat.

In dem Fall, in dem die Reste R1 und R2 für eine Kombination aus Alkyl und Alkyl stehen (Variante α), steht der eine Alkyl-Rest bevorzugt für Adamantyl, tert.-Butyl, sec.-Butyl oder Isopropyl, insbesondere für tert.-Butyl, und der andere Alkyl-Rest für Methyl, Ethyl, Propyl, Butyl, Pentyl oder Hexyl, insbesondere für Methyl oder Ethyl, besonders bevorzugt für Methyl.

In dem Fall, in dem die Reste R1 und R2 für eine Kombination aus Aryl und Alkyl stehen (Variante β), steht der Aryl-Rest bevorzugt für Phenyl, Tolyl, Xylyl, Mesityl, Naphtyl, Fluorenyl, Anthracenyl, insbesondere für Phenyl, und der Alkyl-Rest für Methyl, Adamantyl, tert.-Butyl, sec.-Butyl, Isopropyl, insbesondere für tert.-Butyl und Methyl.

Die Kombination Alkyl und Alkyl (Variante α) ist gegenüber der Kombination Alkyl und Aryl (Variante β) bevorzugt.

R3 und R4 stehen unabhängig voneinander bevorzugt für Wasserstoff, Methyl, Ethyl oder Benzyl, insbesondere für Wasserstoff.

R5 steht bevorzugt für Methyl, Ethyl, Isopropyl, tert.-Butyl, Adamantyl, Mesityl, 2,6-Diisopropylphenyl, Phenyl, Tolyl, Xylyl, Naphtyl, Fluorenyl, Anthracenyl, insbesondere für Methyl, Isopropyl, tert.-Butyl, Adamantyl, Mesityl und 2,6-Diisopropylphenyl.

R6 und R7 stehen bevorzugt unabhängig voneinander für Wasserstoff oder einen 6-gliedrigen aromatischen Ring.

R8 und R9 stehen unabhängig voneinander bevorzugt für Wasserstoff, Alkyl, insbesondere Methyl, Ethyl, Isopropyl, tert.-Butyl, Adamantyl, (CH₂)₄-Kette oder Aryl, insbesondere Phenyl, Tolyl, Xylyl, Mesityl, Naphtyl, Fluorenyl, Anthracenyl. Besonders bevorzugt stehen R8 und R9 unabhängig voneinander für Wasserstoff, Phenyl oder eine (CH₂)₄-Kette.

Die erfindungsgemäßen imidazolgruppenhaltigen Phosphinoboranverbindungen sind vorteihaft optisch aktiv.

Besonders bevorzugt sind entweder beide Enantiomere oder Diastereomere, hervorgegangen aus der enantiomeren Form des Kations, und deren Enantiomere folgender imidazolgruppenhaltiger Phosphinoboranverbindungen: 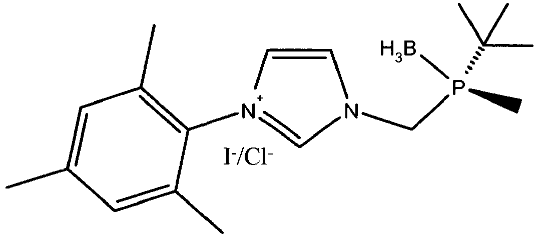 1-{[tert-Butyl(methyl)phosphinoboran]methyl}-3-tert.-butyl-1H-imidazol-3iumchlorid/iodid 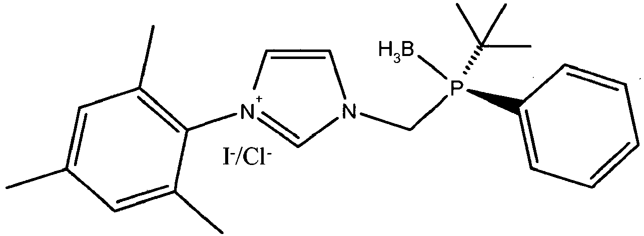 1-{[tert-Butyl(phenyl)phosphinoboran]methyl}-3-(2,4,6-trimethylphenyl)-1H-imidazol-3-iumchlorid/iodid 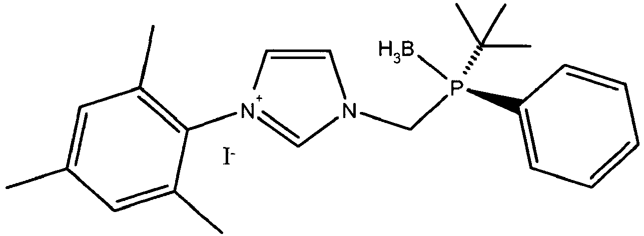 3-Mesityl-1-((tert-butyl(phenyl)phosphinoboran)methyl)-1H-imidazol-3-iumiodid

Ferner betrifft die vorliegende Erfindung ein Verfahren zur Herstellung von imidazolgruppenhaltigen Phosphinoboranverbindungen der allgemeinen Formel I der II, das dadurch gekennzeichnet ist, dass Verbindungen der allgemeinen Formel A 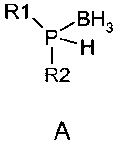 mit Verbindungen der allgemeinen Formel B oder C 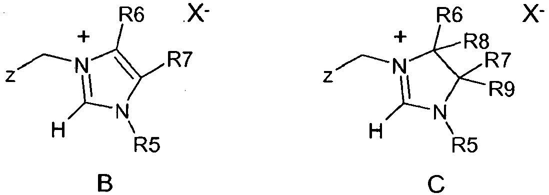 bei einer Temperatur von -80°C bis 40°C in Gegenwart mindestens einer lithiumionenhaltigen Base, wie z.B. Alkylithiumverbindungen unter Verwendung eines oder mehrerer Lösemittel umgesetzt werden.

Ferner betrifft die vorliegende Erfindung ein Verfahren zur Herstellung von optisch aktiven imidazolgruppenhaltigen Phosphinoboranverbindungen der allgemeinen Formel I oder II, das dadurch gekennzeichnet ist, dass Verbindungen der allgemeinen Formel A 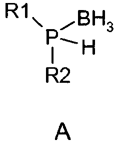 mit Verbindungen der allgemeinen Formel B oder C 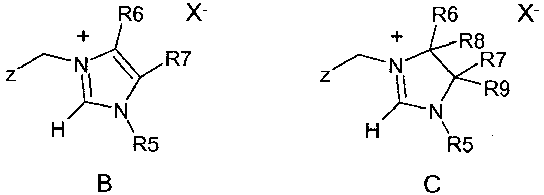 bei einer Temperatur von -80°C bis 40°C in Gegenwart mindestens einer lithiumionenhaltigen Base und mindestens eines chiralen Auxiliars, wie z.B. (-)-Spartein oder eines entsprechenden Surrogats, wie (1R,2S,9S)-11-alkyl-7,11-diazatricyclo[7.3.1.02,7]tridecane, (1R,2S,9S)-11-methyl-7,11-diazatricyclo[7.3.1.02,7]tridecane, wobei in diesem Fall Alkyl bevorzugt für Methyl, Ethyl, Butyl, Benzyl, Isopropyl, 2,2,2-Trimethylethyl, 1-Cyclopropylmethyl oder 1-Cyclohexylmethyl steht, unter Verwendung eines oder mehrerer Lösemittel umgesetzt werden.

Unter Verwendung der Verbindung B erfolgt eine Umsetzung zur Verbindung I und unter Verwendung der Verbindung C erfolgt eine Umsetzung zur Verbindung II.

Bevorzugt wird die Umsetzung bei einer Temperatur von -40 bis 40°C, insbesondere bei einer Temperatur von -20 bis 30°C, durchgeführt. Die Reaktionszeit beträgt typischerweise 1 bis 48 Stunden, bevorzugt 4 bis 24 Stunden. Die optimale Reaktionszeit kann vom Fachmann durch einfache Routineversuche ermittelt werden. Als Lösemittel können alle dem Fachmann bekannten Lösemittel eingesetzt werden, besonders geeignet ist THF, Diethylether oder tert.-Butylmethylether als Lösemittel.

Falls die Verbindungen in enantiomerenangereicherter Form hergestellt werden sollen, wird vorteilhaft bereits vor der Reaktion von Verbindung B oder C mit Verbindung A die Verbindung A mit mindestens einem chiralen (optisch aktiven) Auxiliar, in Gegenwart einer lithiumionen- haltigen Base umgesetzt. Im Anschluß kann die Umsetzung mit B oder C wie oben beschrieben durchgeführt werden.

Bevorzugt wird diese Vorbehandlung durchgeführt, wie im folgenden beschrieben: Verbindung A wird mit mindestens einem optisch aktiven Auxiliar und mindestens einer lithiumionen- haltigen Base bei Temperaturen zwischen -80°C und 0°C in mindestens einem Lösungsmittel, bevorzugt ein etherisches Lösungsmittel, umgesetzt und auf eine Temperatur zwischen 10°C und 40°C gebracht und für 0,5 bis 4 Stunden bei dieser Temperatur gehalten, bevorzugt liegt die Temperatur zwischen 15°C und 30°C und die Verweildauer zwischen 0,5 bis 2 Stunden. Danach kann die Mischung auf die gewünschte Temperatur zur Reaktion mit den Verbindungen B und C gebracht werden.

Die imidazolgruppenhaltigen Phosphinoboranverbindungen der allgemeinen Formel I und II dienen als Precursor zur Herstellung von optisch aktiven Liganden (Carbenen) der allgemeinen Formeln III und IV: 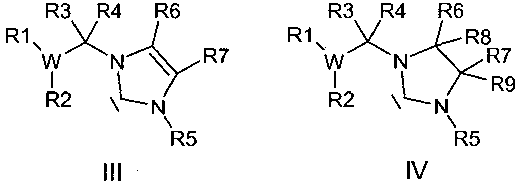 wobei W für Phosphor (P) oder Phosphinoboran (P-BH₃) steht und die weiteren Definitionen bereits bei den allgemeinen Formeln I und II beschrieben sind.

Gegenstand der Erfindung sind ferner optisch aktive Liganden der allgemeinen Formeln V und VI: 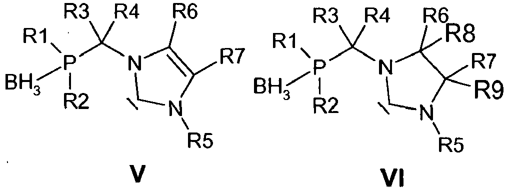 worin
R1 und R2 für verschiedene Reste stehen und ausgewählt sind aus der Gruppe bestehend aus Alkyl und Alkyl (Variante α)
oder
R1 und R2 für verschiedene Reste stehen und ausgewählt sind aus der Gruppe bestehend aus Alkyl und Aryl (Variante β),
R3 und R4 jeweils für gleiche oder verschiedene Reste stehen ausgewählt aus der Gruppe bestehend aus Wasserstoff, Alkyl und Aryl,
R5 für Alkyl oder Aryl steht,
R6 und R7 jeweils für gleiche oder verschiedene Reste stehen ausgewählt aus der Gruppe bestehend aus Wasserstoff, Alkyl, Aryl und einem 6-gliedrigen aliphatischen oder aromatischen Ring,
R8 und R9 unabhängig voneinander für Wasserstoff oder Alkyl stehen.

Die Bevorzugungen der Reste R1 bis R9 entsprechen den oben aufgezeigten Bevorzugungen für die allgemeinen Formel I oder II.

Besonders bevorzugt sind beide Enantiomere folgender optisch aktiver Liganden:

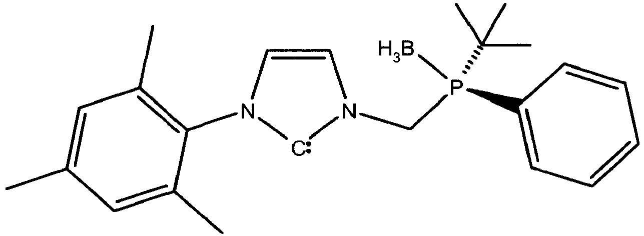

### 1-((tert-butyl(phenyl)phoshinoboran)methyl)-3-mesityl-imidazol-2-yliden

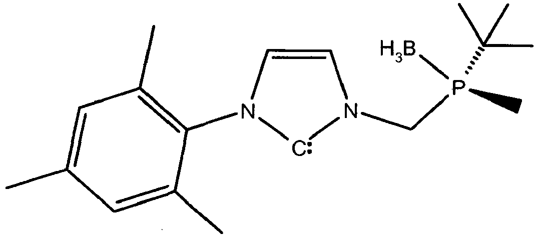

1-((tert-butyl(methyl)phoshinoboran)methyl)-3-mesityl-imidazol-2-yliden

Ferner betrifft die Erfindung ein Verfahren zur Herstellung von Verbindungen der allgemeinen Formel III oder IV, 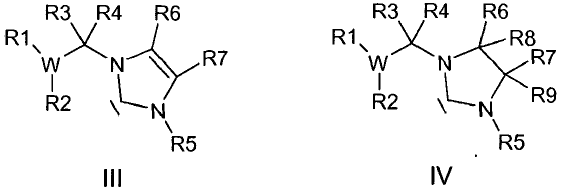 worin
W für Phosphor (P) oder ein Phosphinoboran (P-BH₃) steht,
R1 und R2 für verschiedene Reste stehen und ausgewählt sind aus der Gruppe bestehend aus Alkyl und Alkyl (Variante α)
oder
R1 und R2 für verschiedene Reste stehen und ausgewählt sind aus der Gruppe bestehend aus Alkyl und Aryl (Variante β),
R3 und R4 jeweils für gleiche oder verschiedene Reste stehen ausgewählt aus der Gruppe bestehend aus Wasserstoff, Alkyl und Aryl,
R5 für Alkyl oder Aryl steht,
R6 und R7 jeweils für gleiche oder verschiedene Reste stehen ausgewählt aus der Gruppe bestehend aus Wasserstoff, Alkyl, Aryl und einem 6-gliedrigen aliphatischen oder aromatischen Ring,
R8 und R9 unabhängig voneinander für Wasserstoff oder Alkyl stehen,
das dadurch gekennzeichnet ist, dass Verbindungen der allgemeinen Formel I oder II unter Verwendung jeweils mindestens einer starken Base und eines etherischen oder anderen aprotischen Lösemittels bei einer Temperatur von - 80 bis +20°C zu Verbindungen der allgemeinen Formel III oder IV umgesetzt werden (Schritt (ii)), falls W in der allgemeinen Formel III oder IV für Phosphinoboran steht, wird die Verbindung der allgemeinen Formel I oder II vor oder nach dem Schritt (ii) in Gegenwart von mindestens einem Reagenz in Form (a) eines tertiären oder sekundären Amins, oder (b) mit Polymer gebundenen Amin und mindestens einem Lösemittel bei einer Temperatur von +20°C bis +100°C für 1 bis 200 Stunden entschützt; falls die Verbindung der allgemeinen Formel I oder II vor dem Schritt (i) entschützt wird, kann als Reagenz ferner (c) eine nichtkoordinierende Säure verwendet werden (Schritt (i)).

Bevorzugt wird im Schritt (i) als Reagenz (a) DABCO (Diazabicyclo[2.2.2]nonan), N-Methylpyrrolidin Morpholin oder Diethylamin verwendet. Als Reagenz (b) wird vorteilhaft N-Methyl-piperidinopolystyrol, wie von Sayalero et al. in Synlett, 2006, 2585 beschrieben verwendet. Als Reagenz (c) wird vorteilhaft Methansulphonsäure oder Tetrafluoroborsäure verwendet.

Bei dem im Schritt (i) verwendeten Lösemittel handelt es sich bevorzugt um ein stabiles Lösemittel oder Mischungen von solchen Lösemitteln, beispielsweise etherische, halogenierte oder aromatische Lösemittel wie THF, Diethylether, tert-Butyl-methylether, Dibutylether, Toluol, Hexan, Chlorbenzol, Chloroform, bevorzugt THF, Diethylether, Chlorbenzol, Chloroform.

Die Reaktionstemperatur im Schritt (i) liegt bevorzugt bei 0°C bis 80°C, insbesondere bei 10°C bis 50°C.

Die Reaktionszeit des Schritts (i) beträgt typischerweise 5 bis 100 Stunden, bevorzugt 10 bis 80 Stunden. Allgemeine Hinweise finden sich beispielsweise in (a) Imamoto, T.; Kusumoto, T.; Suzuki, N.; Sato, K. J. Am. Chem. Soc. 1985, 107, 5301; (b) Imamoto, T.; Oshiki, T.; Onozawa, T.; Kusumoto, T.; Sato, K. J. Am. Chem. Soc. 1990, 112, 5244; (c) Stoop, R. M.; Mezzetti, A. Organometallics 1998, 17, 668-675; (d) Yang, H.; Lugan, N.; Mathieu, R. Organometallics 1997, 16, 2089-2095; (e) Stoop, R. M.; Bauer, C.; Setz, P.; Wörle, M.; Wong, T. Y. H.; Mezzetti, A. Organometallics 1999, 18, 5691-5700; (f) Maienza, F.; Spindler, F.; Thommen, M.; Pugin, B.; Malan, C.; Mezzetti, A. J. Org. Chem. 2002, 67, 5239-5249; (g) Brisset, H.; Gourdel, Y.; Pellon, P.; Le Corre, M. Tetrahedron Lett. 1993, 34, 4523; (h) Tsuruta, H.; Imamoto, T. Synlett 2001, 999-1002; (i) McKinstry, L.; Livinghouse, T. Tetrahedron Lett. 1994, 35, 9319. (j) McKinstry, L.; Livinghouse, T. Tetrahedron Lett. 1994, 50, 6145;

Alternativ kann das Verfahren auch mit polymer gebundenen Reagenzien durchgeführt werden. Allgemeine Hinweise dafür findet der Fachmann in: Sayalero, S; Pericäs, M.A. Synlett 2006, 2585-2588.

Im Schritt (ii) werden dem Fachmann bekannte typische starke Basen mit bevorzugterweise einem pK_{B}-Wert von mindestens 14 eingesetzt. Beispielsweise werden KOt-Bu, KOEt, KOMe, KOH, NaOt-Bu, NaOEt, NaOMe, NaOH, LiOH, LiOtBu, LiOMe insbesondere KOt-Bu, KOEt, KOMe, NaOt-Bu, NaOEt, NaOMe, eingesetzt.

Im Schritt (ii) können alle dem Fachmann bekannten etherischen oder andere aprotische Lösungsmittel eingesetzt werden, beispielsweise THF, Diethylether, tert-Butyl-methylether, Dibutylether, Toluol oder Mischungen hieraus.

Die Reaktionsdauer des Schritts (ii) beträgt typischerweise 1 Minute bis 10 Stunden, bevorzugt 5 Minuten bis 5 Stunden, insbesondere 10 Minuten bis 1 Stunde.

Die Reaktionstemperatur im Schritt (ii) liegt bevorzugt bei -60 bis 40°C, insbesondere bei -20 bis 30°C.

Ferner betrifft die Erfindung Übergangsmetallkomplexe, enthaltend als Liganden eine Verbindung der allgemeinen Formel V oder VI.

Die Übergangsmetallkomplexe entsprechen der allgemeinen Formel VII oder VIII:

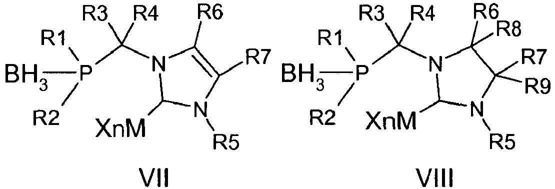

Bevorzugt werden als Übergangsmetalle (M) Metalle der Gruppe 8 bis 11 verwendet, insbesondere Ru, Fe, Co, Rh, Ir, Ni, Pd, Pt, Ag, Cu oder Au, besonders bevorzugt Ru, Rh, Ir, Ni, Pd.

X steht für weitere, gegebenenfalls verschiedene, Liganden, bevorzugt für cod (Cyclooctadien), norbornadien, Cl, Br, I, CO, allyl, benzyl, Cp (Cyclopentadienyl), PCy₃, PPh₃, MeCN, PhCN, dba (Dibenzylidenaceton), acetat, CN, acac (acetylacetonat), methyl und H, insbesondere cod, norbornadien, Cl, CO, allyl, benzyl, acac, PCy₃, MeCN, methyl und H. n variiert zwischen 0 und 4 und ist entsprechend abhängig vom gewählten Übergangsmetall.

Die Definitionen und Bevorzugungen für die Reste R1 bis R9 entsprechen den Bevorzugungen für die Verbindungen der allgemeinen Formeln III bzw. der allgemeinen Formeln I und II.

Ferner betrifft die vorliegende Erfindung ein Verfahren zur Herstellung von Übergangsmetallkomplexen der allgemeinen Formel IX und X, 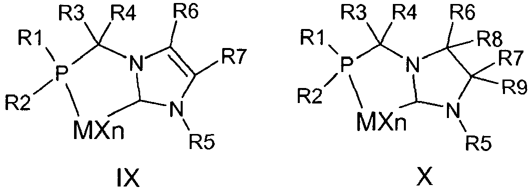 worin
R1 und R2 für verschiedene Reste stehen und ausgewählt sind aus der Gruppe bestehend aus Alkyl und Alkyl (Variante α)
oder
R1 und R2 für verschiedene Reste stehen und ausgewählt sind aus der Gruppe bestehend aus Alkyl und Aryl (Variante β),
R3 und R4 jeweils für gleiche oder verschiedene Reste stehen ausgewählt aus der Gruppe bestehend aus Wasserstoff, Alkyl und Aryl,
R5 für Alkyl oder Aryl steht,
R6 und R7 jeweils für gleiche oder verschiedene Reste stehen ausgewählt aus der Gruppe bestehend aus Wasserstoff, Alkyl, Aryl und einem 6-gliedrigen aliphatischen oder aromatischen Ring,
R8 und R9 unabhängig voneinander für Wasserstoff oder Alkyl stehen,
das dadurch gekennzeichnet ist, dass entweder
(a) optisch aktive Liganden der allgemeinen Formel III oder IV mit Metallkomplexen bei einer Temperatur von -80°C bis +120°C, unter Verwendung von mindestens einem Lösemittel für 5 Minuten bis 72 Stunden umgesetzt werden,
   falls W in der in den allgemeinen Formel III und IV für Phosphinoboran steht, wird die Verbindung der allgemeinen Formel III oder IV vor oder nach Schritt (a) in Gegenwart mindestens eines Reagenzes in Form eines tertiären, sekundären oder mit Polymer gebundenen Amins bei einer Temperatur von +20°C bis +100°C für 1 bis 200 Stunden entschützt,
   oder
(b) imidazolgruppenhaltige Phosphinoboranverbindungen der Formel I oder II mit Metallkomplexen unter Verwendung jeweils mindestens einer starken Base und eines etherischen oder anderen aprotischen Lösemittels bei einer Temperatur von -80°C bis +120°C für 5 Minuten bis 72 Stunden umgesetzt werden, sowie davor oder danach mit mindestens einem Reagenz in Form eines tertiären, sekundären oder mit Polymer gebundenen Amins und mindestens einem Lösemittel bei einer Temperatur von +20°C bis +100°C für 1 bis 200 Stunden umgesetzt werden.

Die Auswahl geeigneter Metallkomplexe, insbesondere deren Abgangs-Liganden, kann vom Fachmann durch Routineversuche vorgenommen werden. Beispielsweise kommen als Metallkomplexe [Ir(cod)Cl]₂, [Rh(cod)Cl]₂, [Ir(norbornadien)Cl]₂, [Rh(norbornadien)Cl]₂, Rh(cod)acac, [RhCl(C₈H₁₄)₂]₂, Rh(cod)(Methallyl), Rh(cod)₂X, Rh(norbornadien)₂X, Ir(cod)₂X (mit X=BF₄, ClO₄, CF₃SO₃, CH₃SO₃, HSO₄, B(phenyl)₄, B[bis(3,5-trifluoromethyl)phenyl]₄, PF₆, SbCl₆, AsF₆, SbF₆), Rh(OAc)₃ Rh(acac)(CO)₂, Rh₄(CO)₁₂, RhCl(PPh₃)₃, [RhCl(CO)₂]₂, RuCp₂, RuCp(CO)₃, [Rul₂(cymene)]₂, [RuCl₂(benzen)]₂ Ru(cod)(Methallyl)₂, RuCl₂(PCy₃)₂CHPh, (PCy₃)Cl₂RuCl(OiPrO-Ph), RuCl₂(C₂₁H₂₄N₂)(C₁₅H₁₀)(PCy₃), [Pd(allyl)Cl]₂, Pd₂(dba)₃, Pd(dba)₂, Pd(PPh₃)₄, Pd(OAc)₂, PdCl₂(MeCN)₂, PdCl₂(PhCN)₂, Pd(cod)CIMe, Pd(tmeda)Me₂, Pt(cod)Me₂, Pt(cod)Cl₂, SnCl₂, CuCl, CuCl₂, CuCN, Cu(CF₃SO₃)₂, [Ni(allyl)Cl]₂, Ni(cod)₂ in Betracht. Bevorzugt sind [Ir(cod)Cl]₂, [Rh(cod)Cl]₂, [Ir(norbornadien)Cl]₂, [Rh(norbornadien)Cl]₂, Rh(cod)acac, Rh(OAc)₃, Rh(cod)₂X, Rh(norbornadien)₂X, Ir(cod)₂X (mit X=BF₄, CIO₄, CF₃SO₃, CH₃SO₃, HSO₄, B(phenyl)₄, B[bis(3,5-trifluoromethyl)phenyl]₄, PF₆, SbCl₆, AsF₆, SbF₆), Rh(acac)(CO)₂, [RhCl(CO)₂]₂, RuCp₂, RuCp(CO)₃, [RuCl₂(cymene)]₂, RuCl₂(PCy₃)₂CHPh, (PCya)Cl₂RuCl(OiPrO-Ph), Ru(cod)(Methallyl)₂, [Pd(allyl)Cl]₂, Pd₂(dba)₃, CuCN, Cu(CF₃SO₃)₂, [Ni(allyl)Cl]₂, Ni(cod)₂ insbesondere [Ir(cod)Cl]₂, [Rh(cod)Cl]₂, Rh(cod)acac, Rh(cod)₂X, Rh(norbornadien)₂X, Ir(cod)₂X (mit X=BF₄, ClO₄, CF₃SO₃, CH₃SO₃, HSO₄, B(phenyl)₄, B[bis(3,5-trifluoromethyl)phenyl]₄, PF₆, SbCl₆, AsF₆, SbF₆), Rh(acac)(CO)₂, [RuCl₂(cymene)]₂, RuCl₂(PCy₃)₂CHPh, Ru(cod)(Methallyl)₂, [Pd(allyl)Cl]₂, Cu(CF₃SO₃)₂, [Ni(allyl)Cl]₂, Ni(cod)₂.

In der Option (a) liegt die Reaktionstemperatur vorteilhaft bei -80°C bis +120°C, bevorzugt bei 0°C bis +50°C. Die Reaktionsdauer liegt vorteilhaft bei 5 Minuten bis 72 Stunden, bevorzugt bei 1 bis 24 Stunden. Als Lösemittel können alle dem Fachmann gängigen Lösemittel eingesetzt werden, beispielsweise THF, Diethylether, Hexan, Pentan, CHCl₃, CH₂Cl₂, Toluol, Benzol, DMSO oder Acetonitril, bevorzugt sind THF, Diethylether, CH₂Cl₂, Toluol oder Hexan.

In der Option (b) entsprechen die Bevorzugungen im Bezug auf die starke Base und des etherischen oder anderen aprotischen Lösemittels denen für den Schritt (ii) und die Bevorzugungen im Bezug auf das Reagenz und die entsprechenden Verfahrensparameter denen für den Schritt (i) beschriebenen. In der Option (b) beträgt die Reaktionstemperatur vorteilhaft -80°C bis +120°C, bevorzugt 0°C bis +50°C. Die Reaktionsdauer liegt vorteilhaft bei 5 Minuten bis 72 Stunden, bevorzugt bei 1 bis 24 Stunden.

Ferner betrifft die vorliegende Erfindung Katalysatoren, umfassend wenigstens einen Komplex mit einem Übergangsmetall der als Liganden wenigstens eine Verbindung der allgemeinen Formel V oder VI enthält.

Bevorzugt sind Übergangsmetalle der Gruppe 8 bis 11, insbesondere Ru, Fe, Co, Rh, Ir, Ni, Pd, Pt, Ag oder Au, besonders bevorzugt Ru, Rh, Ir, Ni oder Pd.

Bevorzugt sind folgende Katalysatoren, die herstellbar sind, entweder (Variante 1) durch Umsetzung imidazolgruppenhaltiger Phosphinoboranverbindungen der Formel I oder II mit Metallkomplexen unter Verwendung von jeweils mindestens einer starken Base und eines etherischen oder anderen aprotischen Lösemittels bei einer Temperatur von -80°C bis +120°C für 5 Minuten bis 72 Stunden, sowie davor oder danach Umsetzung mit mindestens einem Reagenz in Form eines tertiären, sekundären oder mit Polymer gebundenen Amins und mindestens einem Lösemittel bei einer Temperatur von +20°C bis +100°Cfür 1 bis 200 Stunden.
oder
(Variante 2) durch Umsetzung optisch aktiver Liganden der allgemeinen Formel III oder IV mit Metallkomplexen bei einer Temperatur von -80°C bis +120°C, unter Verwendung mindestens eines etherischen oder anderen aprotischen Lösemittels für 5 Minuten bis 72 Stunden,
falls W in der in den allgemeinen Formel III und IV für Phosphinoboran steht, wird die Verbindung der allgemeinen Formel III oder IV zuvor in Gegenwart mindestens eines Reagenzes in Form eines tertiären, sekundären oder mit Polymer gebundenen Amins und mindestens einem Lösemittel bei einer Temperatur von +20°C bis +100°C für 1 bis 200 Stunden entschützt,
oder
(Variante 3) durch Lösung der Übergangsmetallkomplexe der Formel VII - X in mindestens einem Lösemittel.

Besonders bevorzugt ist die Variante (a). Diese Variante stellt die Möglichkeit der insitu-Synthese von homogenen Katalysatoren dar.

Die bevorzugten Reaktionsparameter der Varianten 1 und 2 sind voranstehend beschrieben.

Ein weiterer Gegenstand der Erfindung ist die Verwendung von Katalysatoren, umfassend wenigstens einen Komplex mit einem Übergangsmetall der als Liganden wenigstens eine Verbindung der allgemeinen Formel III oder IV enthält - wie zuvor beschrieben - für organische Transformationsreaktionen. Unter organischen Transformationsreaktionen werden beispielsweise Hydrierung, Hydroborierung, Hydroaminierung, Hydroamidierung, Hydroalkoxylierung, Hydrovinylierung, Hydroformylierung, Hydrocarboxylierung, Hydrocyanierung, Hydrosilylierung, Carbonylierung, Kreuzkupplung, allylische Substitution, Aldol-Reaktion, Olefin-Metathese, C-H Aktivierung und Polymerisation verstanden.

Besonders bevorzugt ist die Verwendung von Katalysatoren enthaltend Übergangsmetallkomplexe enthaltend als Liganden wenigstens eine Verbindung, deren direkte Vorstufe ausgewählt ist aus der Gruppe bestehend aus 1-((tert-butyl(methyl)phoshino-boran)methyl)-3-mesityl-imidazol-2-yliden, 3-tert.-Butyl-1-((tert-butyl(methyl)phoshino-boran)methyl)-imidazol-2-yliden, 3-Adamantyl-1-((tert-butyl(methyl)phoshino-boran)methyl)-imidazol-2-yliden, 1-((tert-butyl(phenyl)phoshino-boran)methyl)-3-mesityl-imidazol-2-yliden, 3-tert.-Butyl-1-((tert-butyl(phenyl)phoshino-boran)methyl)-imidazol-2-yliden, 3-Adamantyl-1-((tert-butyl(phenyl)phoshino-boran)methyl)-imidazol-2-yliden zur asymmetrischen Hydrierung ungesättigter organischer Verbindungen.

Durch die vorliegende Erfindung können somit sehr kostengünstige Liganden, deren Effizienz mit dem Stand der Technik vergleichbar ist, zur Verfügung gestellt werden.

Besonders vorteilhaft ist die Möglichkeit, homogene Katalysatoren unterschiedlicher Enantiomere, die robuste Carben-Einheiten enthalten, herzustellen.

### Beispiele

### 1) Synthese von imidazolgruppenhaltigen Phosphinoboranverbindungen der Formel I

### 1.1) Synthese von (R_{P})- und (S_{P})- 3-Mesityl-1-[(tert-butyl(phenyl)phoshino)methyl]-imidazoliden

### 1.1.1) N-tert-Butylimidazol 1 und N-Mesitylimidazol 2

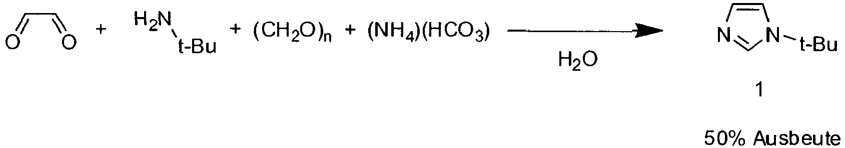

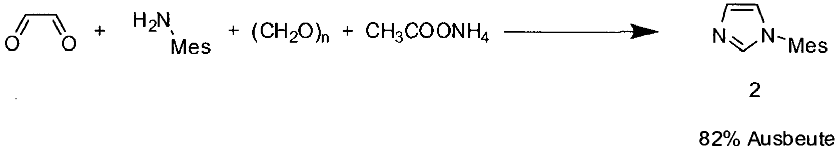

N-tert-Butylimidazol (1) und N-Mesitylimidazol (2) wurden nach einer Literaturvorschrift synthetisiert. [A. J. Arduengo, III et al. US Patent, No. US 6,177,575 B1]

### 1.1.2) rac-P(BH₃)(H)(Ph)(t-Bu)

rac-P(BH₃)(H)(Ph)(t-Bu) wurde nach einer Literaturvorschrift hergestellt. [Imamoto, T.; Oshiki, T.; Onozawa, T.; Kusumoto, T.; Sato, K. J. Am. Chem. Soc. 1990, 112, 5244]

### 1.1.3) 3-(halomethyl)-1-mesityl-1H-imidazol-3-ium chlorid/iodid

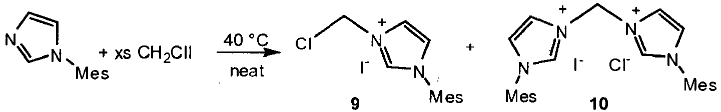

Mesityl-imidazol (530 mg, 2.85 mmol) gelöst in CH₂lCl (10 mL, 137 mmol) wurde bei 40 °C für 3 Tage gerührt. Die Mischung wurde im Vakuum eingeengt. ¹H NMR (CDCl₃) Analyse des Rückstands zeigt eine Mischung von 9 (85%) and 10 (15%). Der weiße Feststoff wurde mit Et₂O gewaschen (3 x 5 mL), suspendiert in CHCl₃ (5 mL), und über einer Fritte filtriert. Es wurden 388 mg (38% yield) eines weißen Pulvers erhalten. Auf Basis von NMR- und Elementaranalyse besteht das Produkt aus einer ungefähren 1:1 Mischung von Chloromethyl und lodomethyl-imidazolium Salzen.
Anal. Calcd. For C₁₃H₁₆I₂N₂ (9-I): C, 34.39; H, 3.55; N, 6.17. Anal. Calcd. For C₁₃H₁ClIN₂ (9-Cl): C, 43.06; H, 4.45; N, 7.72. Found: C, 38.46; H, 4.00; N, 6.84. Alternativ kann die Rohmischung aus 9 and 10 mittels Säulenchromatographie (Aceton:Et₂O 3:1; R_{f} = 0.31) gereinigt werden.
9-I. ¹H NMR (CDCl₃): δ 10.30 (1H, imid), 8.11 (m, 1H, imid), 7.23 (m, 1H, imid), 7.03 (2H, Ar), 6.72 (2H, CH₂), 2.36 (3H, Me), 2.14 (3H, Me), 2.12 (3H, Me) ppm.
EA Ber. Für C₁₃H₁₆I₂N₂ (9-I): C, 34.39; H, 3.55; N, 6.17. Gefunden: C, 34.82; H, 3.61; N, 6.21.

### 1.1.4) 1-((tert-butyl(phenyl)phosphino-boran)methyl)-3-mesityl-1H-imidazol-3-ium iodide (8).

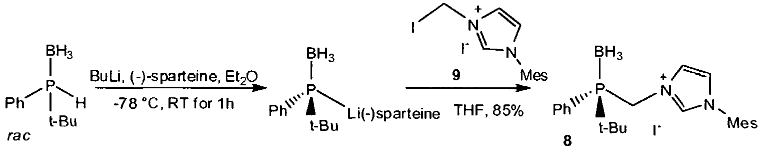

Racemisches (BH₃)PH(Ph)(t-Bu) (498 mg, 3 mmol) wurde zu einer Lösung von (-)-Sparteine (914 mg, 3.9 mmol) in Et₂O (50 mL) unter Argon gegeben. Nachdem die Mischung wurde auf -78 °C abgekühlt wurde, wurde n-BuLi (2.6 M in toluene, 1.2 mL, 3 mmol) über eine Spritze zugegeben. Die Reaktionsmischungwurde auf Raumtemperatur erwärmt und für 1 h bei dieser Temperatur gerührt. Nachdem wieder auf -78 °C abgekühlt wurde, wurde eine Lösung von of 9-I (1.09 g, 2.4 mmol) in THF (50 mL) unter Argon zugegeben. Die Reaktionsmischung wurde dann langsam auf -20°C erwärmt und bei dieser Temperatur 16 h gerührt. Danach wurde die Mischung mit 5% wässriger Schwefelsäure (60 mL) gewaschen, die wässrige Phase mit CH₂Cl₂ (3 x 50 mL) extrahiert, die vereinigten organischen Phasen mit Wasser (50 mL) und gesättigter Kochsalzlösung (50 mL) gewaschen, über MgSO₄ getrocknet und im Vakuum eingeengt, um 850 mg (71 % Ausbeute) eines weißen Feststoffs zu erhalten.
¹H NMR (CDCl₃): δ 9.53 (1 H, imid), 8.13-8.05 (m, 2H), 7.74 (1 H), 7.47 (m, 3H), 6.96 (1 H, Ar), 6.86 (1 H, Ar), 6.82 (1 H, Ar), 6.59 (dd, J = 14, 10, 1 H, CH₂), 5.25 (d, J = 14, 1 H, CH₂), 2.21 (3H, Me), 1.92 (3H, Me), 1.54 (3H, Me), 1.21 (d, J_{P-H} = 14, 9H, t-Bu). ¹³C{¹H} NMR (CDCl₃): δ 141.4 (quart.), 138.2, 134.8 (d, J_{C-P} = 10), 134.1 (d, J_{C-P} = 19, quart.), 132.5 (d, J_{C-P} = 3), 130.2 (quart.), 129.7 (d, J_{C-P} = 14), 129.1 (d, J_{C-P} = 10), 124.7, 122.2 (quart.), 121.8, 121.2 (quart.), 42.7 (d, J = 31, P-CH₂), 30.5 (d, J_{C-P} = 31, P-CMe₃), 25.8 (d, J_{C-P} = 3, CMe₃), 21.0 (Me), 17.6 (Me), 16.7 (Me). ³¹P NMR (CDCl₃): δ 37.4 (breit) ppm. EA. Ber. Für C₂₃H₃₃BIN₂P: C, 54.57; H, 6.57; N, 5.53. Gefunden: C, 56.72; H, 6.89; N, 5.75. HRMS (ESI) m/z ber. für C₂₃H₃₃BN₂P (BH₃-M⁺) 379.2473, gefunden 379.2468. HRMS (ESI) m/z ber. für C₂₃H₃₀N₂P (M⁺) 365.2141, gefunden 365.2140.

### 1.1.5) Herstellung des Boran-geschützten freien Carbens 11 und des freien Liganden 1

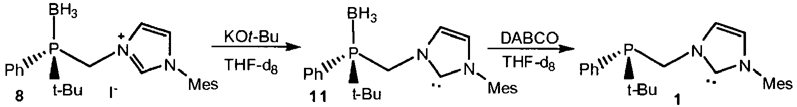

Synthese von 11. Zu einer Lösung von KOt-Bu (7 mg, 0.062 mmol) in THF-d₈ (0.5 mL) wurde 8 (25.3 mg, 0.05 mmol) als Feststoff gegeben. Die Bildung einer violetten Lösung wurde sofort beobachtet. Die Reaktion wurde mittels ¹H and ³¹P NMR (THF-d₈) Spectroskopie verfolgt. Die Reaktion war nach 3 Minuten vollständig erfolgt. Ausgewählte ¹H NMR (THF-d₈) Signale: δ 8.01-7.91 (m, 2H, Ar), 7.50-7.38 (m, 3H, Ar), 7.34 (d, J = 2, 1 H, Carben Rückgrat), 6.89 (2H, Ar), 6.79 (d, J = 2, 1 H, Carben Rückgrat), 5.23 (dd, J = 14, 2, 1 H, P-CH₂-Carben), 5.08 (dd, J = 14, 6, 1 H, P-CH₂-Carben), 2.28 (3H, Me), 1.97 (breit, 3H, Me), 1.19 (d, J = 14, 9H, CMe₃). Ausgewähkte ¹³C{¹H} NMR (THF-d₈) signals: δ 229.1, 137.9, 135.9, 135.5 (d, J = 8), 132.3 (d, J = 3), 129.4, 129.0 (d, J = 10), 126.7, 125.7, 121.9, 121.6, 45.0 (d, J = 34), 30.7 (d, J = 29), 21.2, 18.2. ³¹P NMR (THF-d₈): 30.5 (m, P-BH₃) ppm.
Synthese von 1. Zu der so hergestellten Lösung wurde DABCO (5.6 mg, 0.05 mmol) als Feststoff zugegeben. Die Reaktion wurde mittels ¹H and ³¹P NMR (THF-d₈) Spectroskopie verfolgt. Nach 3 h, Signale von 1 wurden neben dem Signal des Vorläufers 11 beobachtet (Verhältniss 1:2) Nach 24 h betrug das Verhältniss 2:1, Nach 48 h betrug das Verhältniss 7:1. Etwa 20% Nebenprodukt wurde ebenfalls beobachtet. Ausgewählte ¹H NMR (THF-d₈) Signale: δ 7.67-7.59 (m, 2H, Ar), 7.36-7.33 (m, 3H, Ar), 7.25 (d, J = 2, 1H, Carben Rückgrat), 6,93 (2H, Ar), 6.82 (d, J = 2, 1 H, Carben Rückgrat), 5.04 (dd, J = 14, 6, 1H, P-CH₂-carben), 4.76 (dd, J = 14, 2, 1 H, P-CH₂-carben), 2.27 (3H, Me), 1.91 (3H, Me), 1.04 (d, J = 12, 9H, CMe₃). ³¹P NMR (THF-d₈): 1.4 ppm.

### 1.1.6) Herstellung des Imidazoliumphosphans 6-I sowie des freien Liganden 1 über 6-I

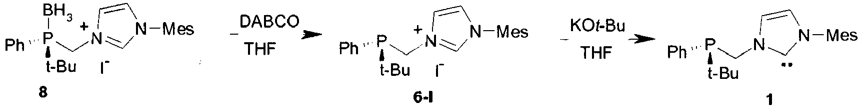

Synthese von 6-I: Zu einer Lösung von DABCO (5.6 mg, 0.05 mmol) in THF-d₈ (0.5 mL) wurde 8 (25.3 mg, 0.05 mmol) als Feststoff zugegeben, die Mischung in eine NMR-Rohr gefüllt und der Reaktionsfortschritt mittels ¹H und ³¹P NMR Spektroskopie verfolgt. Nach 24 h enthielt die Mischung 88% an 6-I. Nach Zugabe von weiterem DABCO (1.7 mg, 0.015 mmol) wurde für weitere 2 Tage gerührt und ³¹P-NMR-spektroskopisch konnten keine Signale, die zu 8 gehörten, mehr gefunden werden. ¹H NMR (THF-d₈) Signale: δ 10.51 (1 H, imid), 8.27 (1 H, imid), 8.04-7.96 (m, 2H, Ar), 7.54 (1 H, imid), 7.39-7.37 (m, 3H, Ar), 7.02-6.99 (m, 2H, Ar), 6.14 (d, J = 14, 1 H, P-CH₂-imid) 5.57 (dd, J = 14, 12, 1 H, P-CH₂-imid), 2.29 (3H, Me), 2.00 (3H, Me), 1.78 (3H, Me), 1.12 (d, J = 12, 9H, CMe₃). ³¹P{¹H} NMR (THF-d₈): 11.2 ppm.
Synthese von 1: Eine Lösung von DABCO (92.2 mg, 0.821 mmol) in THF (1 mL) wurde zu einer Suspension von 8 (320 mg, 0.632 mmol) in THF (20 mL) gegeben. Nach drei Tagen Reaktionszeit wurde keinen Signale für das Startmaterial ³¹P-NMR spektroskopisch mehr gefunden. Es wurde dann KOt-Bu (78 mg, 0.695 mmol) als Feststoff zugegeben, das Lösungsmittel im Vakuum entfernt und der Rückstand mit Pentan extrahiert. Nach Filtration über Celite wurde das Lösungsmittel im Vakuum entfernt und der Rückstand NMR-spektrokopisch als 1 charakterisiert.
¹H NMR (THF-d₈): δ 7.67-7.59 (m, 2H, Ar), 7.36-7.33 (m, 3H, Ar), 7.25 (d, J = 2, 1H, Carben Rückgrat), 6.88 (2H, Ar), 6.82 (d, J = 2, 1 H, Carben Rückgrat), 5.04 (dd, J = 14, 6, 1 H, P-CH₂-yliden), 4.76 (dd, J = 14, 4, 1 H, P-CH₂-yliden), 2.27 (3H, Me), 1.91 (3H, Me), 1.11 (3H, Me), 1.04 (d, J = 12, 9H, CMe₃). ³¹P{¹H} NMR (THF-d₈): 1.4.
¹H NMR (C₆D₆): δ 7.64-7.56 (m, 2H, Ar), 7.20-7.15 (m, 3H, Ar), 7.10 (d, J = 2, 1H, Carben Rückgrat), 6.79 (2H, Ar), 6.40 (d, J = 2, 1H, Carben Rückgrat), 5.01 (dd, J = 14, 6, 1 H, P-CH₂-yliden), 4.72 (dd, J = 14, 2, 1 H, P-CH₂-yliden), 2.51 (3H, Me), 2.16 (3H, Me), 1.31 (3H, Me), 1.04 (d, J = 12, 9H, CMe₃). ¹³C{¹H} NMR (C₆D₆): δ 215.5 (s, NCN), 139.3 (quart.), 137.5 (quart.), 135.4 (d, J_{C-P} = 20, Ar), 134.7 (d, J_{C-P} = 19, quart.), 129.8, 129.4, 128.6 (d, J_{C-P} = 8), 121.5, 119.5 (d, J_{C-P} = 8), 46.5 (d, J_{C-P} = 15, CH₂), 32.4 (CH₃), 30.1 (d, J_{C-P} = 15, P-Cquat), 27.9 (d, J_{C-P} = 14, CH₃), 21.4 (CH₃), 18.4 (CH₃). ³¹P{¹H} NMR (C₆D₆): δ 1.7 ppm.

### 2) Synthese von Übergangsmetallkomplexen der Formel IX und X

### 2.1) Synthese von [Pd(28)Cl₂] 31

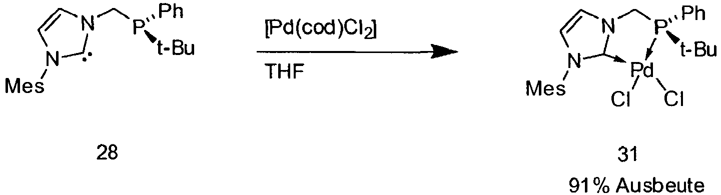

0.1 mmol Ligand 28 wurden unter Argonatmosphäre in 5 ml THF gelöst und auf eine Suspension von 0.1 mmol [Pd(cod)Cl₂] in 5 ml THF kanüliert. Die Mischung wurde ein Tag lang bei Raumtemperatur gerührt und anschließend zur Trockene eingeengt. Überschüssiges cod und Carben wurden durch Waschen des resultierenden gelben Feststoffs mit Pentan entfernt und das Produkt am Vakuum getrocknet.
Ausbeute: 50 mg, 91 %; Gelber kristalliner Feststoff; ³¹P NMR (CDCl₃), δ_{P} = 66.1. ¹³C NMR (CDCl₃), δ_{C} (J_{C,P}), Hz) 17.7 (s, CH₃), 18.6 (s, CH₃), 21.2 (s, CH₃), 27.0 (d, J=3.5, PC(CH₃)₃), 31.2 (d, J=10.5, PC(CH₃)₃), 45.7 (d, J=33.8, PCH₂N), 138.8-125.5 (CHₘ+C_{Ar}), 162.4 (s, Cₗₘ). ¹H NMR (CDCl₃), δ_{H} (J_{H,H} und J_{H,P}), Hz) 0.96 (d, J=6.6, 9H; PtBu), 1.39 (s, 3H; Me), 1.70 (s, 3H; Me), 2.02 (s, 3H; Me), 4.78 (d, J=14.8, 1 H; PCH₂N), 5.41 (d, J=14.5, 1 H; PCH₂N), 7.19 (s, 2H; CH_{Ar}), 7.25-7.37 (m, 5H; CH_{Im}+CH_{Ar}), 8.09 (m, 2H; CH_{Ar}). MS (ESI): m/z (%): 505 (100) [M-Cl]⁺. HRMS (TOF MS ES): Ber. m/z 505.0786 (C₂₃H₂₉N₂PPdCl). Gef. m/z 505.0778.

### 2.2) Synthese von [Pt(28)Cl₂] 32

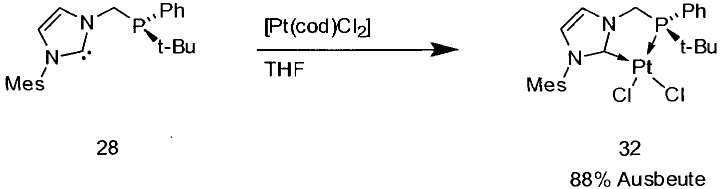

0.1 mmol Ligand 28 wurden unter Argonatmosphäre in 5 ml THF gelöst und auf eine Suspension von 0.1 mmol [Pt(cod)Cl₂] in 5 ml THF kanüliert. Die Mischung wurde ein Tag lang bei Raumtemperatur gerührt und anschließend zur Trockene eingeengt. Überschüssiges cod und Carben wurden durch Waschen des resultierenden gelben Feststoffs mit Pentan entfernt und das Produkt am Vakuum getrocknet.
Ausbeute: 55 mg, 88 %; Gelber kristalliner Feststoff; ³¹P NMR (CDCl₃), δ_{P} (J_{P,Pt}), Hz) 46.1. (s+sat, J=3651). ¹³C NMR (CDCl₃), δ_{C} (J_{C,P} und J_{C,Pt}), Hz) 17.3 (s, CH₃), 18.4 (s, CH₃), 20.9 (s, CH₃), 26.6 (d, J=2.6, J=28.1, PC(CH₃)₃), 29.7 (d, J=3.5, J=18.1, PC(CH₃)₃), 45.3 (d, J=40.2, PCH₂N), 141.8-124.8 (CH_{Im}+C_{Ar}), 160.5 (s, C_{Im}). ¹H NMR (CDCl₃), δ_{H} (J_{H,H} und J_{H,P}), Hz) 1.32 (d, J=16.9, 9H; PtBu), 1.58 (s, 3H; Me), 2.06 (s, 3H; Me), 2.22 (s, 3H; Me), 4.63 (m, 2H; PCH₂N), 7.11-8.13 (m, 9H; CH_{Im}+CH_{Ar}). MS (ESI): m/z (%): 595 (100) [M-Cl]⁺. HRMS (TOF MS ES): Ber. m/z 594.1399 (C₂₃H₂₉N₂PPtCl). Gef. m/z 594.0505.

### 2.3) Synthese von [Ni(28)(allyl)]Cl 33

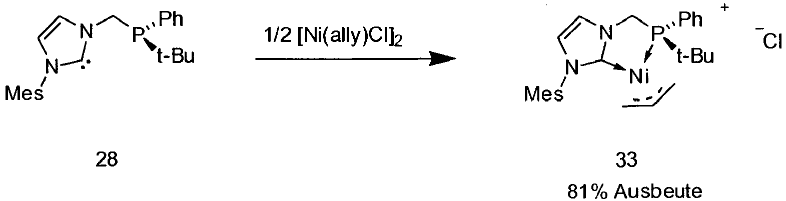

0.075 g, (0.28 mmol) [Ni(allyl)Cl]₂ und 0.212 g, (0.58 mmol) Ligand 28 wurden gemeinsam in einem Schlenkrohr eingewogen und unter Rühren mit 15 ml Hexan versetzt. Nach drei Stunden Rühren bei Raumtemperatur wurde der ausgefallene Komplex abfiltriert und dreimal mit 10 ml Pentan gewaschen und das Produkt am Vakuum getrocknet.
Ausbeute: 0.227 g, 81 %; gelber kristalliner Feststoff; ³¹P NMR (CDCl₃), δ_{P} = 74.3 (50%), 72.4 (50%). MS (ESI): m/z (%): 463 (100) [M-Cl]+. HRMS (TOF MS ES): Ber. m/z 463.1807 (C₂₆H₃₄N₂PNi). Gef. m/z 463.0682.

### 2.4) Synthese von [Ni(28)allyl]B(Ar^{f})₄ 34

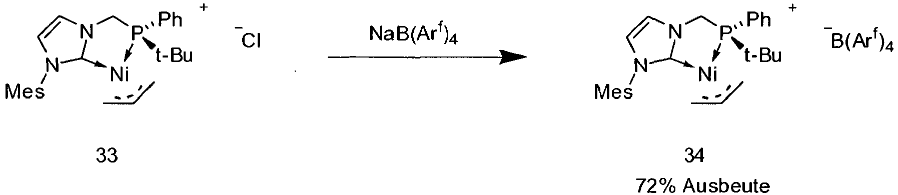

55 mg (0.11 mmol) Komplex 33 und 102 mg (0.12 mmol) NaB(Ar^{f})₄ wurden gemeinsam in einem Schlenkrohr eingewogen und auf -78°C gekühlt. Auf diese Mischung wurden unter Rühren 10 ml auf die gleiche Temperatur gekühltes Diethylether kanüliert und die Mischung unter Rühren langsam bis auf Raumtemperatur erwärmt. Die Lösung wurde abfiltriert und im Vakuum zur Trockene eingeengt.
Ausbeute: 0.105 g, 72 %; Gelber kristalliner Feststoff; ³¹P NMR (CDCl₃), δ_{P} = 78.8 (50%), 77.0 (50%). ¹³C NMR (CDCl₃), δ_{C} (J_{C,P}), Hz) 17.2 (s, CH₃), 17.4 (s, CH₃), 21.1 (s, CH₃), 26.7 (d, J=6.0, PC(CH₃)₃), 33.0 (s, PC(CH₃)₃), 46.4 (d, J=27.2, PCH₂N), 56.9 (d, J=33.4, CH_{2,allyl}), 67.5 (s, CH_{2,allyl}), 114.6 (d, J=18.1, CH_{allyl}), 140.9-117.7 (CH_{Im}+C_{Ar}), 160.4 (s, C_{Ar}), 161.4 (s, C_{Ar}), 161.5 (s, C_{Im}), 162.4 (s, C_{Ar}), 163.3 (s, C_{Ar}). ¹H NMR (CDCl₃), δ_{H} (J_{H,H} und J_{H,P}), Hz) 1.08 (d, J=15.8, 9H; PtBu), 1.53 (s, 3H; Me), 1.82 (s, 3H; Me), 1.91 (s, 3H; Me), 3.19 (m, 2H; CH_{2,allyl}), 4.22 (m, 2H; CH_{2,allyl}), 4.73 (m, 2H; PCH₂N), 6.93 (bs, 1H; CH_{allyl}), 7.48-7.67 (m, 12H; CH_{Im}+CH_{Ar}). MS (ESI): m/z (%): 463 (100) [M-BARF]⁺.

### 3) Katalytische Anwendungen

### 3.1) 1-Hexen Oligomerisation mit [Ni(28)allyl]B(Ar^{f})₄ 34

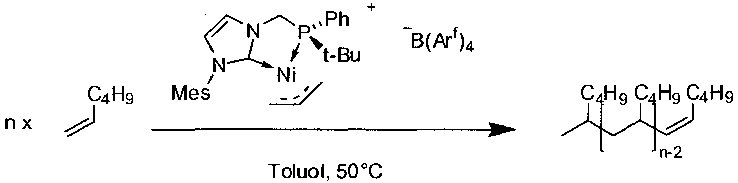

2 mg, (1.5×10⁻⁶mol) [Ni(28)allyl]B(Ar^{f})₄ 34 wurden 50 ml Toluol und 5 ml 1-Hexen in einem Schlenkrohr zugefügt. Die Mischung wurde ein Tag lang bei 50°C gerührt und die Oligomeren mit GC/MS identifiziert. Es wurden Dimere und Trimere identifiziert.

### 3.2) Ethylen Oligomerisation

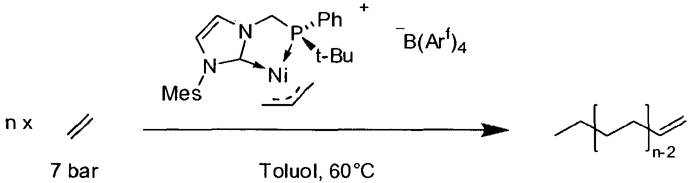

Der Katalysator [Ni(28)allyl]B(Ar^{f})₄ 34 (2 mg, 15×10⁻⁶mol) wurde in der Glove-Box in einen Autoklav eingewogen. Es wurden 50 ml Toluol zugegeben. Der Autoklav wurde dann an eine Druckapparatur angeschlossen, mehrmals mit Ethylen gespült und unter der gewünschten Temperatur und Druck gerührt. Nach gewünschter Reaktionszeit wurde die Oligomerisation abgebrochen und der Autoklav geöffnet. Die erhaltene Lösung wurde mittels GC/MS Analytik untersucht. Die Oligomerenverteilung nach 12 Stunden war identisch mit der Verteilung nach 2 Stunden.

### Oligomere nach 2 Stunden (GC/MS)

| n | Verteilung [%] |
|---|---|
| 2 | 16 |
| 3 | 37 |
| 4 | 34 |
| 5 | 9 |
| 6 | 3 |
| 7 | 1 |

### 3.3) Propylen Oligomerisation

Der Katalysator [Ni(28)allyl]B(Ar^{f})₄ 34 (2 mg, 1.5×10⁻⁶mol) wurde in der Glove-Box in einen Autoklav eingewogen. Es wurden 50 ml Toluol zugegeben. Der Autoklav wurde dann an eine Druckapparatur angeschlossen, mehrmals mit Propylen gespült und unter der gewünschten Temperatur und Druck gerührt. Nach gewünschter Reaktionszeit wurde die Oligomerisation abgebrochen und der Autoklav geöffnet. Die erhaltene Lösung wurde mittels GC/MS Analytik untersucht. Nach 2 Stunden Reaktionszeit wurde nur das Dimer identifiziert, 24 Stunden Reaktionszeit wurden Oligomere von n = 3 - n = 7 identifiziert.

### 3.4) Hydrierung von Methyl-α-acetamidoacrylat

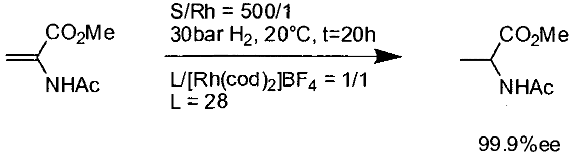

S/Rh = Verhältnis Substrate/Rhodiumkomplex [mol/mol];
t = Zeit;
L/[Rh(cod)₂]BF₄ = Verhältnis des eingesetzten NHCP-Liganden (L) zu dem eingesetzten Metallkomplex;
ee = Enantiomerenüberschuss;
ee [%] = (Enantiomer 1 - Enantiomer 2)/(Enantiomer 1 + Enantiomer 2); wobei Enantiomer 1 und Enantiomer 2 für die beiden möglichen enantiomeren Produkte stehen.

In der Glove-Box wurden unter Inertbedingungen zu 5 mL einer Lösung von 2x10⁻⁶ mol [Rh(cod)₂]BF₄ in CH₂Cl₂ 5 mL 2x10⁻⁶ mol eine Stammlösung des Liganden 28 in CH₂Cl₂ gegeben. Die Mischung wurde 5 min bei Raumtemperatur gerührt. Anschließend wurden 1.0 mmol Methyl α-acetamidoacrylat in 10 mL CH₂Cl₂ zugegeben.
Der Autoklav wurde dreimal mit Wasserstoff gespült, um gelöstes Argon zu entfernen. Hydriert wurde 20 h bei 20°C und 30 bar H₂. Um den Katalysator zu entfernen, wurde die Lösung auf eine kurze Kieselgelsäule gegeben und mit CH₂Cl₂ eluiert. Der Enantiomerenüberschuss wurde gaschromatographisch bestimmt.

**Tabelle 1: Vergleich mit dem Stand der Technik**

| | Liganden | Enantiomerenüberschuss (ee) |
|---|---|---|
| Vorliegende Erfindung | 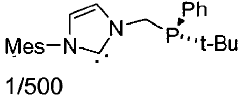 | 99.9% |
| Stand der Technik | 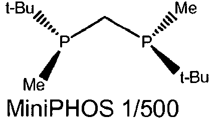 | 99.9% |
| | Y.Yamanoi, T. Imamoto J. Org. Chem. 1999, 64, 2988-2989 | |
| | 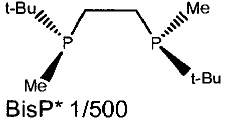 | 98% |
| | T. Imamoto, J. Watanabe, Y. Wada, H. Masuda, H. Yamada, H. Tsuruta, S. Matsukawa, K. Yamaguchi J. Am. Chem. Soc. 1998, 120, 1635- | |
| | 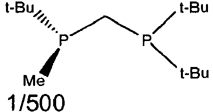 | >99% |
| | G. Hoge, H.-P. Wu, W. Kissel, D. Pflum, D. Greene, J. Bao J. Am. Chem. Soc. 2004, 126, 5966-5967 | |

Die Liganden des Stands der Technik zeichnen sich durch aufwändige Synthesen, vor allem beider optischer Antipoden, aus. Die erfindungsgemäßen Liganden lassen sich einfach und mit vergleichbaren Effizienzen in Form beider optischer Antipoden herstellen.

## Patentansprüche

1. Imidazolgruppenhaltige Phosphinoboranverbindungen der allgemeinen Formel I oder II: 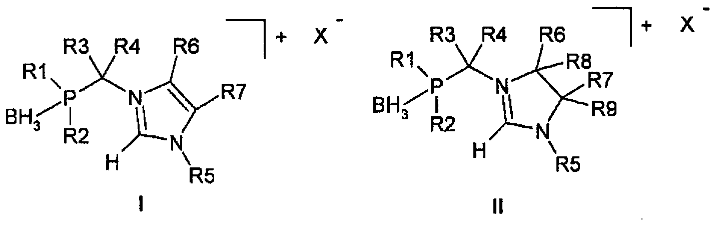 worin
R1 und R2 für verschiedene Reste stehen und ausgewählt sind aus der Gruppe bestehend aus Alkyl und Alkyl (Variante α)
oder
R1 und R2 für verschiedene Reste stehen und ausgewählt sind aus der Gruppe bestehend aus Alkyl und Aryl (Variante β),
R3 und R4 jeweils für gleiche oder verschiedene Reste stehen ausgewählt aus der Gruppe bestehend aus Wasserstoff, Alkyl und Aryl,
R5 für Alkyl oder Aryl steht,
R6 und R7 jeweils für gleiche oder verschiedene Reste stehen ausgewählt aus der Gruppe bestehend aus Wasserstoff, Alkyl, Aryl und einem 6-gliedrigen aliphatischen oder aromatischen Ring,
R8 und R9 unabhängig voneinander für Wasserstoff oder Alkyl stehen,
X für eine Abgangsgruppe ausgewählt aus Chlor, Brom, Iod, Trifluoroacetyl, Acetyl, Benzoyl, Tosyl, Nosyl, Triflat, Nonaflat, Campher-10-sulfonat steht.

2. Imidazolgruppenhaltige Phosphinoboranverbindungen nach Anspruch 1,
worin
im Fall der Variante α:
R1 für Adamantyl, tert.-Butyl, sec.-Butyl oder Isopropyl und R2 für Methyl, Ethyl, Propyl, Butyl, Pentyl oder Hexyl steht,
im Fall der Variante β:
R1 für Phenyl, Tolyl, Xylyl, Mesityl, Naphtyl, Fluorenyl, Anthracenyl, und R2 für Adamantyl, tert.-Butyl, sec.-Butyl, Isopropyl oder Methyl steht,
R3 und R4 stehen unabhängig voneinander für Wasserstoff, Methyl, Ethyl oder Benzyl,
R5 steht für Methyl, Ethyl, Isopropyl, tert.-Butyl, Adamantyl, Mesityl, Phenyl, Tolyl, Xylyl, Naphthyl, Fluorenyl oder Anthracenyl,
R6 und R7 stehen unabhängig voneinander für Wasserstoff oder einen 6-gliedrigen aromatischen Ring,
R8 und R9 stehen unabhängig voneinander für Wasserstoff, Alkyl oder Aryl,
X für eine Abgangsgruppe ausgewählt aus Chlor, Brom, Iod, Trifluoroacetyl, Acetyl, Benzoyl, Tosyl, Nosyl, Triflat, Nonaflat, Campher-10-sulfonat steht.

3. Imidazolgruppenhaltige Phosphinoboranverbindungen nach Anspruch 1,
worin
im Fall der Variante α:
R1 für tert.-Butyl und R2 für Methyl oder Ethyl steht,
im Fall der Variante β:
R1 für Phenyl und R2 für tert.-Butyl oder Methyl steht,
R3 und R4 für Wasserstoff stehen,
R5 steht für Methyl, Isopropyl, tert.-Butyl, Adamantyl oder Mesityl,
R6 und R7 stehen unabhängig voneinander für Wasserstoff oder einen 6-gliedrigen aromatischen Ring,
R8 und R9 stehen unabhängig voneinander Wasserstoff, Phenyl oder eine (CH₂)₄-Kette,
X für eine Abgangsgruppe ausgewählt aus Chlor, Brom, Iod, Trifluoroacetyl, Acetyl, Benzoyl, Tosyl, Nosyl, Triflat, Nonaflat, Campher-10-sulfonat steht.

4. Verfahren zur Herstellung von imidazolgruppenhaltigen Phosphinoboranverbindungen der allgemeinen Formel I oder II, 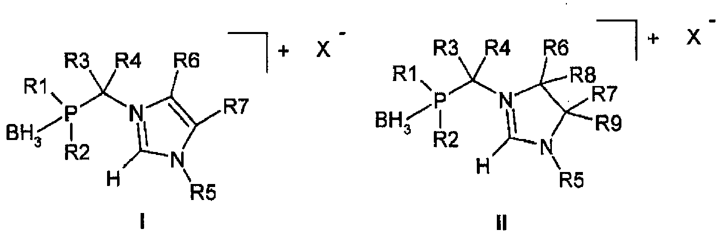 **dadurch gekennzeichnet, dass** Verbindungen der allgemeinen Formel A 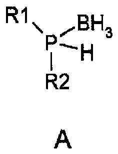 mit Verbindungen der allgemeinen Formel B oder C 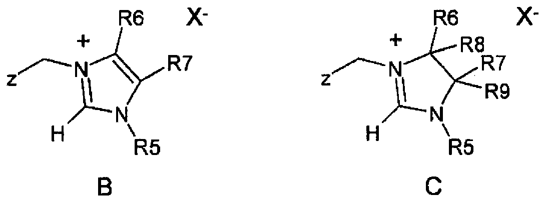 bei einer Temperatur von -80°C bis 40°C in Gegenwart mindestens einer lithiumionen-haltigen Base unter Verwendung eines oder mehrerer Lösemittel umgesetzt werden.

5. Verfahren zur Herstellung optisch aktiver imidazolgruppenhaltiger Phosphinoboranverbindungen der allgemeinen Formel I oder II, 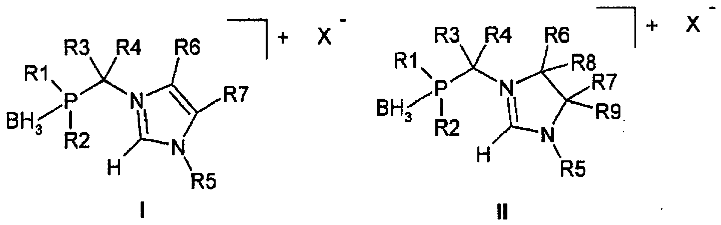 **dadurch gekennzeichnet, dass** Verbindungen der allgemeinen Formel A 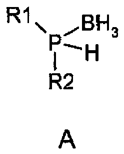 mit Verbindungen der allgemeinen Formel B oder C 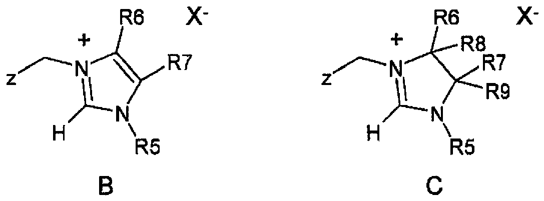 bei einer Temperatur von -80°C bis 40°C in Gegenwart mindestens einer lithiumionen-haltigen Base und mindestens eines chiralen Auxiliars unter Verwendung eines oder mehrerer Lösemittel umgesetzt werden.

6. Verfahren nach Anspruch 5, **dadurch gekennzeichnet, dass** die Verbindung der allgemeinen Formel A mit mindestens einem chiralen Auxiliar und mindestens einer Base bei Temperaturen zwischen -80°C und 0°C in mindestens einem Lösungsmittel umgesetzt wird und anschließend auf eine Temperatur zwischen 10°C und 40°C gebracht und für 0,5 bis 4 Stunden gehalten wird, im Folgenden wird die erhaltende Mischung mit der Verbindung der allgemeinen Formel B oder C bei Temperaturen von -80°C bis 40°C umgesetzt.

7. Optisch aktiver Ligand der allgemeinen Formel V: 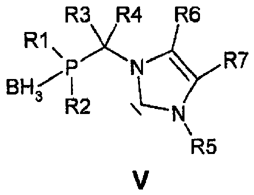 worin
R1 und R2 für verschiedene Reste stehen und ausgewählt sind aus der Gruppe bestehend aus Alkyl und Alkyl (Variante α)
oder
R1 und R2 für verschiedene Reste stehen und ausgewählt sind aus der Gruppe bestehend aus Alkyl und Aryl (Variante β),
R3 und R4 jeweils für gleiche oder verschiedene Reste stehen ausgewählt aus der Gruppe bestehend aus Wasserstoff, Alkyl und Aryl,
R5 für Alkyl oder Aryl steht,
R6 und R7 jeweils für gleiche oder verschiedene Reste stehen ausgewählt aus der Gruppe bestehend aus Wasserstoff, Alkyl, Aryl und einem 6-gliedrigen aliphatischen oder aromatischen Ring.

8. Optisch aktiver Ligand nach Anspruch 7,
worin
im Fall der Variante α:
R1 für Adamantyl, tert.-Butyl, sec.-Butyl oder Isopropyl und R2 für Methyl, Ethyl, Propyl, Butyl, Pentyl oder Hexyl steht,
im Fall der Variante β:
R1 für Phenyl, Tolyl, Xylyl, Mesityl, Naphtyl, Fluorenyl, Anthracenyl, und R2 für Adamantyl, tert.-Butyl, sec.-Butyl, Isopropyl oder Methyl steht,
R3 und R4 stehen unabhängig voneinander für Wasserstoff, Methyl, Ethyl oder Benzyl,
R5 steht für Methyl, Ethyl, Isopropyl, tert.-Butyl, Adamantyl, Mesityl, Phenyl, Tolyl, Xylyl, Naphthyl, Fluorenyl oder Anthracenyl,
R6 und R7 stehen unabhängig voneinander für Wasserstoff oder einen 6-gliedrigen aromatischen Ring.

9. Optisch aktiver Ligand nach Anspruch 7,
worin
im Fall der Variante α:
R1 für tert.-Butyl und R2 für Methyl oder Ethyl steht,
im Fall der Variante β:
R1 für Phenyl und R2 für tert.-Butyl oder Methyl steht,
R3 und R4 für Wasserstoff stehen,
R5 steht für Methyl, Isopropyl, tert.-Butyl, Adamantyl oder Mesityl,
R6 und R7 stehen unabhängig voneinander für Wasserstoff oder einen 6-gliedrigen aromatischen Ring.

10. Verfahren zur Herstellung von Verbindungen der allgemeinen Formel III oder IV, 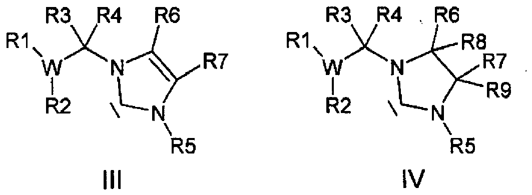 **dadurch gekennzeichnet, dass** Verbindungen der allgemeinen Formel I oder II 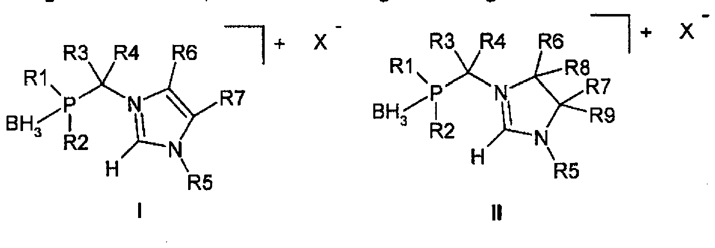 unter Verwendung jeweils mindestens einer starken Base und eines etherischen oder anderen aprotischen Lösemittels bei einer Temperatur von - 80 bis +20°C zu Verbindungen der allgemeinen Formel I oder IV umgesetzt werden (Schritt (ii)), falls W in der allgemeinen Formel III oder IV für Phosphor steht, wird die Verbindung der allgemeinen Formel I oder II vor oder nach dem Schritt (ii) in Gegenwart von mindestens eines Reagenzes in Form (a) eines tertiären oder sekundären Amins, oder (b) mit Polymer gebundenen Amin und mindestens einem Lösemittel bei einer Temperatur von +20°C bis +100°C für 1 bis 200 Stunden entschützt; falls die Verbindung der allgemeinen Formel I oder II vor dem Schritt (i) entschützt wird, kann als Reagenz ferner (c) eine nichtkoordinierende Säure verwendet werden (Schritt (i)).

11. Übergangsmetallkomplexe, enthaltend als Liganden wenigstens eine Verbindung der allgemeinen Formel V oder VI 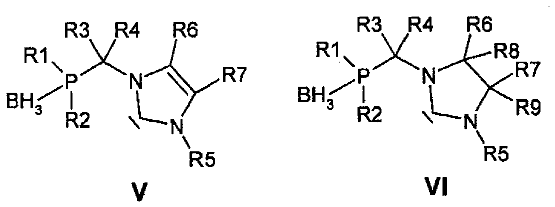 worin
R1 und R2 für verschiedene Reste stehen und ausgewählt sind aus der Gruppe bestehend aus Alkyl und Alkyl (Variante α)
oder
R1 und R2 für verschiedene Reste stehen und ausgewählt sind aus der Gruppe bestehend aus Alkyl und Aryl (Variante β),
R3 und R4 jeweils für gleiche oder verschiedene Reste stehen ausgewählt aus der Gruppe bestehend aus Wasserstoff, Alkyl und Aryl,
R5 für Alkyl oder Aryl steht,
R6 und R7 jeweils für gleiche oder verschiedene Reste stehen ausgewählt aus der Gruppe bestehend aus Wasserstoff, Alkyl, Aryl und einem 6-gliedrigen aliphatischein oder aromatischen Ring,
R8 und R9 unabhängig voneinander für Wasserstoff oder Alkyl stehen.

12. Übergangsmetallkomplexe nach Anspruch 11,
worin
im Fall der Variante α:
R1 für Adamantyl, tert.-Butyl, sec.-Butyl oder Isopropyl und R2 für Methyl, Ethyl, Propyl, Butyl, Pentyl oder Hexyl steht,
im Fall der Variante β:
R1 für Phenyl, Tolyl, Xylyl, Mesityl, Naphtyl, Fluorenyl, Anthracenyl, und R2 für Adamantyl, tert.-Butyl, sec.-Butyl, Isopropyl oder Methyl steht,
R3 und R4 stehen unabhängig voneinander für Wasserstoff, Methyl, Ethyl oder Benzyl,
R5 steht für Methyl, Ethyl, Isopropyl, tert.-Butyl, Adamantyl, Mesityl, Phenyl, Tolyl, Xylyl, Naphthyl, Fluorenyl oder Anthracenyl,
R6 und R7 stehen unabhängig voneinander für Wasserstoff oder einen 6-gliedrigen aromatischen Ring.
R8 und R9 stehen unabhängig voneinander für Wasserstoff, Alkyl oder Aryl.

13. Übergangsmetallkomplexe nach Anspruch 11,
worin
im Fall der Variante α:
R1 für tert.-Butyl und R2 für Methyl oder Ethyl steht,
im Fall der Variante β:
R1 für Phenyl und R2 für tert.-Butyl oder Methyl steht,
R3 und R4 für Wasserstoff stehen,
R5 steht für Methyl, Isopropyl, tert.-Butyl, Adamantyl oder Mesityl,
R6 und R7 stehen unabhängig voneinander für Wasserstoff oder einen 6-gliedrigen aromatischen Ring,
R8 und R9 stehen unabhängig voneinander Wasserstoff, Phenyl oder eine (CH₂)₄-Kette.

14. Übergangsmetallkomplex nach den Ansprüchen 11 bis 13, enthaltend als Liganden 1-((tert-butyl(methyl)phosphinoboran)methyl)-3-mesityl-imidazol-2-yliden, 3-tert.-Butyl-1-((tert-butyl(methyl)phosphinoboran)methyl)-imidazol-2-yliden, 3-Adamantyl-1-((tert-butyl(methyl)phosphinoboran)methyl)-imidazol-2-yliden, 1-((tert-butyl(phenyl)phosphinoboran)methyl)-3-mesityl-imidazol-2-yliden, 3-tert.-Butyl-1-((tert-butyl(phenyl)phosphinoboran)methyl)-imidazol-2-yliden, 3-Adamantyl-1-((tert-butyl(phenyl)phosphinoboran)methyl)-imidazol-2-yliden.

15. Übergangsmetallkomplex nach den Ansprüchen 11 bis 14, wobei als Übergangsmetalle Ru, Fe, Co, Rh, Ir, Ni, Pd, Pt, Ag, Cu oder Au verwendet werden.

16. Verfahren zur Herstellung von Übergangsmetallkomplexen nach den Ansprüchen 11 bis 14, **dadurch gekennzeichnet, dass**
entweder
(a) optisch aktive Liganden der allgemeinen Formel III oder IV mit Metallkomplexen bei einer Temperatur von -80°C bis +120°C, unter Verwendung mindestens einem Lösemittel für 5 Minuten bis 72 Stunden umgesetzt werden, falls W in der in den allgemeinen Formel III und IV für Phosphinoboran steht, wird die Verbindung der allgemeinen Formel III oder IV vor oder nach Schritt (a) in Gegenwart mindestens eines Reagenzes in Form eines tertiären, sekundären oder mit Polymer gebundenen Amins und mindestens einem Lösemittel bei einer Temperatur von +20°C bis +100°C für 1 bis 200 Stunden entschützt,
oder
(b) imidazolgruppenhaltige Phosphinoboranverbindungen der Formen I oder II mit Metallkomplexen unter Verwendung jeweils mindestens einer starken Base und eines etherischen oder anderen aprotischen Lösemittels bei einer Temperatur von - 80°C bis +120°C für 5 Minuten bis 72 Stunden umgesetzt werden, sowie davor oder danach Umsetzung mit mindestens einem Reagenz in Form eines tertiären, sekundären oder mit Polymer gebundenen Amins und mindestens einem Lösemittel bei einer Temperatur von +20°C bis +100°C für 1 bis 200 Stunden.

17. Katalysatoren, herstellbar entweder
(Variante 1) durch Umsetzung imidazolgruppenhaltiger Phosphinoboranverbindungen der Formel I oder II 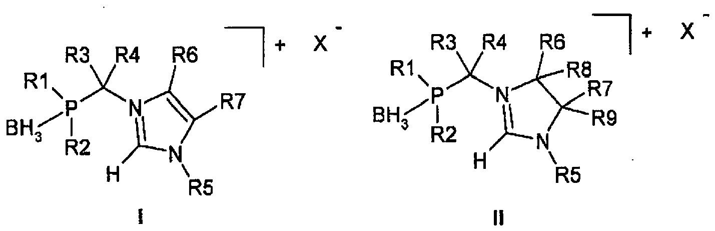 mit Metallkomplexen unter Verwendung von jeweils mindestens einer starken Base und eines etherischen oder anderen aptorischen Lösemittels bei einer Temperatur von -80°C bis +120°C für 5 Minuten bis 72 Stunden,
sowie davor oder danach Umsetzung mit mindestens einem Reagenz in Form eines tertiären, sekundären oder mit Polymer gebundenen Amins und mindestens einem Lösemittel bei einer Temperatur von +20°C bis +100°C für 1 bis 200 Stunden,
oder
(Variante 2) durch Umsetzung optisch aktiver Liganden der allgemeinen Formel III oder IV 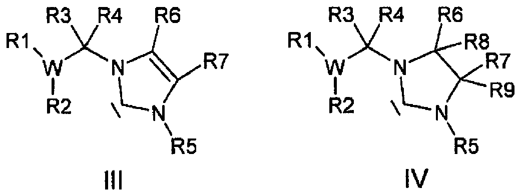 worin W für Phosphinoboran steht,
mit Metallkomplexen bei einer Temperatur von -80°C bis +120°C, unter Verwendung mindestens eines Lösemittel für 5 Minuten bis 72 Stunden, wobei die Verbindung der allgemeinen Formel III oder IV vor oder nach Schritt (a) in Gegenwart mindestens eines Reagenzes in Form eines tertiären, sekundären oder mit Polymer gebundenen Amins und mindestens einem Lösemittel bei einer Temperatur von +20°C bis +100°C für 1 bis 200 Stunden entschützt wird
oder
(Variante 3) durch Lösung der Übergangsmetallkomplexe der Formel VII bis VIII 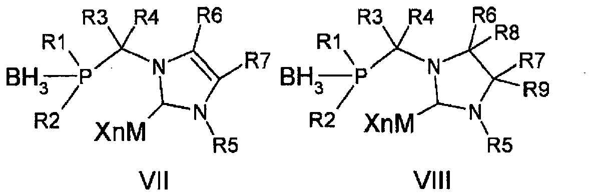 in mindestens einem Lösemittel.

18. Verwendung von Katalysatoren nach den Ansprüchen 17 für organische Transformationsreaktionen.

19. Verwendung von Katalysatoren nach Anspruch 17 für Hydrierung, Hydroborierung, Hydroaminierung, Hydroamidierung, Hydroalkoxylierung, Hydrovinylierung, Hydroformylierung, Hydrocarboxylierung, Hydrocyanierung, Hydrosilylierung, Carbonylierung, Kreuzkopplung, allylische Substitution, Aldol-Reaktion, Olefin-Metathese, C-H Aktivierung oder Polymerisation.

20. Verwendung von Katalysatoren enthaltend Übergangsmetallkomplexe nach Anspruch 11 zur asymmetrischen Hydrierung ungesättigter organischer Verbindungen.

## Claims

1. An imidazolo-containing phosphinoborane compound of the general formula I or II: 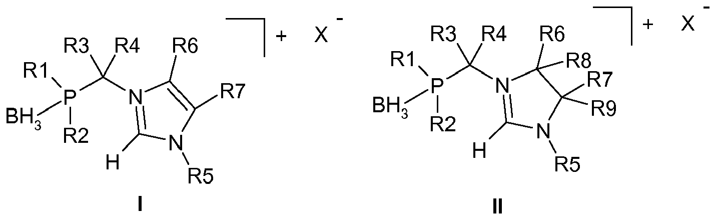 in which
R1 and R2 are different radicals and are selected from the group consisting of alkyl and alkyl (variant α)
or
R1 and R2 are different radicals and are selected from the group consisting of alkyl and aryl (variant β),
R3 and R4 are each identical or different radicals selected from the group consisting of hydrogen, alkyl and aryl,
R5 is alkyl or aryl,
R6 and R7 are each identical or different radicals selected from the group consisting of hydrogen, alkyl, aryl and a 6-membered aliphatic or aromatic ring,
R8 and R9 are each independently hydrogen or alkyl,
X is a leaving group selected from chlorine, bromine, iodine, trifluoroacetyl, acetyl, benzoyl, tosyl, nosyl, triflate, nonaflate, camphor-10-sulfonate.

2. The imidazolo-containing phosphinoborane compound according to claim 1,
in which
in the case of variant α:
R1 is adamantyl, tert-butyl, sec-butyl or isopropyl, and R2 is methyl, ethyl, propyl, butyl, pentyl or hexyl,
in the case of variant β:
R1 is phenyl, tolyl, xylyl, mesityl, naphthyl, fluorenyl, anthracenyl, and R2 is adamantyl, tert-butyl, sec-butyl, isopropyl or methyl,
R3 and R4 are each independently hydrogen, methyl, ethyl or benzyl,
R5 is methyl, ethyl, isopropyl, tert-butyl, adamantyl, mesityl, phenyl, tolyl, xylyl, naphthyl, fluorenyl or anthracenyl,
R6 and R7 are each independently hydrogen or a 6-membered aromatic ring,
R8 and R9 are each independently hydrogen, alkyl or aryl,
X is a leaving group selected from chlorine, bromine, iodine, trifluoroacetyl, acetyl, benzoyl, tosyl, nosyl, triflate, nonaflate, camphor-10-sulfonate.

3. The imidazolo-containing phosphinoborane compound according to claim 1,
in which
in the case of variant α:
R1 is tert-butyl and R2 is methyl or ethyl,
in the case of variant β:
R1 is phenyl and R2 is tert-butyl or methyl,
R3 and R4 are each hydrogen,
R5 is methyl, isopropyl, tert-butyl, adamantyl or mesityl,
R6 and R7 are each independently hydrogen or a 6-membered aromatic ring,
R8 and R9 are each independently hydrogen, phenyl or a (CH₂)₄ chain,
X is a leaving group selected from chlorine, bromine, iodine, trifluoroacetyl, acetyl, benzoyl, tosyl, nosyl, triflate, nonaflate, camphor-10-sulfonate.

4. A process for preparing imidazolo-containing phosphinoborane compounds of the general formula I or II, 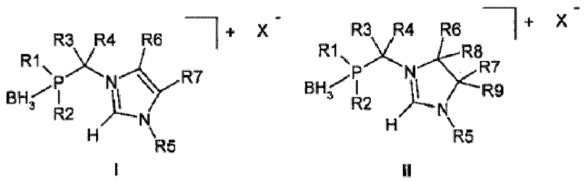 which comprises reacting compounds of the general formula A 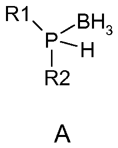 with compounds of the general formula B or C 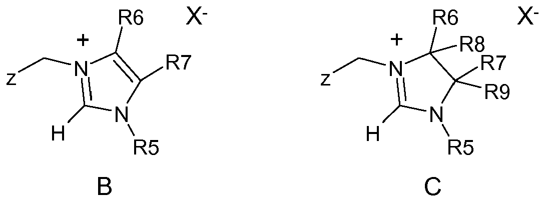 at a temperature of -80°C to 40°C in the presence of at least one lithium ion-containing base using one or more solvents.

5. A process for preparing optically active imidazolo-containing phosphinoborane compounds of the general formula I or II, 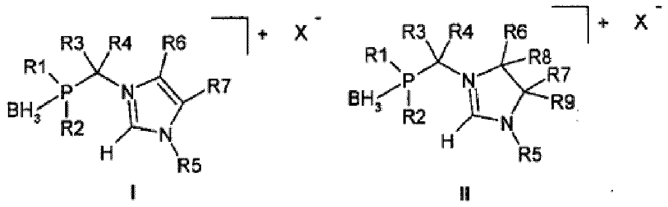 which comprises reacting compounds of the general formula A 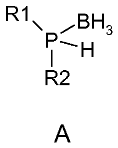 with compounds of the general formula B or C 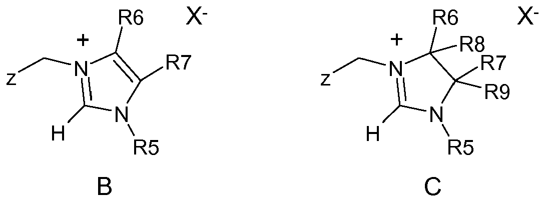 at a temperature of -80°C to 40°C in the presence of at least one lithium ion-containing base and of at least one chiral auxiliary using one or more solvents.

6. The process according to claim 5, wherein the compound of the general formula A is reacted with at least one chiral auxiliary and at least one base at temperatures between -80°C and 0°C in at least one solvent and then brought to a temperature between 10°C and 40°C and held for 0.5 to 4 hours, and the resulting mixture is subsequently reacted with the compound of the general formula B or C at temperatures of -80°C to 40°C.

7. An optically active ligand of the general formula V: 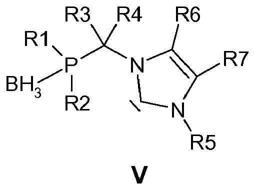 in which
R1 and R2 are different radicals and are selected from the group consisting of alkyl and alkyl (variant α)
or
R1 and R2 are different radicals and are selected from the group consisting of alkyl and aryl (variant β),
R3 and R4 are each identical or different radicals selected from the group consisting of hydrogen, alkyl and aryl,
R5 is alkyl or aryl,
R6 and R7 are each identical or different radicals selected from the group consisting of hydrogen, alkyl, aryl and a 6-membered aliphatic or aromatic ring.

8. The optically active ligand according to claim 7,
in which
in the case of variant α:
R1 is adamantyl, tert-butyl, sec-butyl or isopropyl, and R2 is methyl, ethyl, propyl, butyl, pentyl or hexyl,
in the case of variant β:
R1 is phenyl, tolyl, xylyl, mesityl, naphthyl, fluorenyl, anthracenyl, and R2 is adamantyl, tert-butyl, sec-butyl, isopropyl or methyl,
R3 and R4 are each independently hydrogen, methyl, ethyl or benzyl,
R5 is methyl, ethyl, isopropyl, tert-butyl, adamantyl, mesityl, phenyl, tolyl, xylyl, naphthyl, fluorenyl or anthracenyl,
R6 and R7 are each independently hydrogen or a 6-membered aromatic ring.

9. The optically active ligand according to claim 7,
in which
in the case of variant α:
R1 is tert-butyl and R2 is methyl or ethyl,
in the case of variant β:
R1 is phenyl and R2 is tert-butyl or methyl,
R3 and R4 are each hydrogen,
R5 is methyl, isopropyl, tert-butyl, adamantyl or mesityl,
R6 and R7 are each independently hydrogen or a 6-membered aromatic ring.

10. A process for preparing compounds of the general formula III or IV, 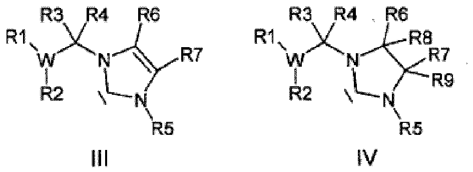 which comprises converting compounds of the general formula I or II 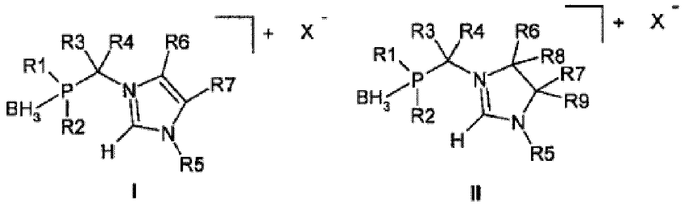 using in each case at least one strong base and an ethereal or other aprotic solvent at a temperature of -80 to +20°C to compounds of the general formula II or IV (step (ii)),
if W in the general formula III or IV is phosphorus, the compound of the general formula I or II, before or after step (ii), is deprotected in the presence of at least one reagent in the form (a) of a tertiary or secondary amine, or (b) of polymer-bound amine and at least one solvent at a temperature of +20°C to +100°C for 1 to 200 hours; if the compound of the general formula I or II is deprotected before step (i), the reagent used may also be (c) a noncoordinating acid (step (i)).

11. A transition metal complex comprising, as a ligand, at least one compound of the general formula V or VI 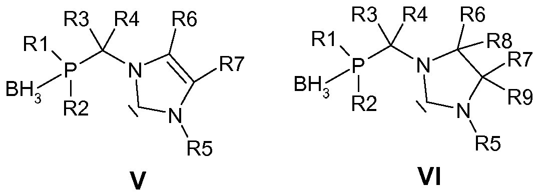 in which
R1 and R2 are different radicals and are selected from the group consisting of alkyl and alkyl (variant α)
or
R1 and R2 are different radicals and are selected from the group consisting of alkyl and aryl (variant β),
R3 and R4 are each identical or different radicals selected from the group consisting of hydrogen, alkyl and aryl,
R5 is alkyl or aryl,
R6 and R7 are each identical or different radicals selected from the group consisting of hydrogen, alkyl, aryl and a 6-membered aliphatic or aromatic ring,
R8 and R9 are each independently hydrogen or alkyl.

12. The transition metal complex according to claim 11,
in which
in the case of variant α:
R1 is adamantyl, tert-butyl, sec-butyl or isopropyl, and R2 is methyl, ethyl, propyl, butyl, pentyl or hexyl,
in the case of variant β:
R1 is phenyl, tolyl, xylyl, mesityl, naphthyl, fluorenyl, anthracenyl, and R2 is adamantyl, tert-butyl, sec-butyl, isopropyl or methyl,
R3 and R4 are each independently hydrogen, methyl, ethyl or benzyl,
R5 is methyl, ethyl, isopropyl, tert-butyl, adamantyl, mesityl, phenyl, tolyl, xylyl, naphthyl, fluorenyl or anthracenyl,
R6 and R7 are each independently hydrogen or a 6-membered aromatic ring,
R8 and R9 are each independently hydrogen, alkyl or aryl.

13. The transition metal complex according to claim 11,
in which
in the case of variant α:
R1 is tert-butyl and R2 is methyl or ethyl,
in the case of variant β:
R1 is phenyl and R2 is tert-butyl or methyl,
R3 and R4 are each hydrogen,
R5 is methyl, isopropyl, tert-butyl, adamantyl or mesityl,
R6 and R7 are each independently hydrogen or a 6-membered aromatic ring,
R8 and R9 are each independently hydrogen, phenyl or a (CH₂)₄ chain.

14. The transition metal complex according to claims 11 to 13, comprising, as ligands, 1-((tert-butyl(methyl)phosphinoborane)methyl)-3-mesitylimidazol-2-ylidene, 3-tert-butyl-1-((tert-butyl(methyl)phosphinoborane)methyl)imidazol-2-ylidene, 3-adamantyl-1-((tert-butyl-(methyl)phosphinoborane)methyl)imidazol-2-ylidene, 1-((tert-butyl(phenyl)phosphinoborane)methyl)-3-mesitylimidazol-2-ylidene, 3-tert-butyl-1-((tert-butyl(phenyl)phosphinoborane)methyl)imidazol-2-ylidene, 3-adamantyl-1-((tert-butyl(phenyl)phosphinoborane)methyl)-imidazol-2-ylidene.

15. The transition metal complex according to claims 11 to 14, wherein the transition metals used are Ru, Fe, Co, Rh, Ir, Ni, Pd, Pt, Ag, Cu or Au.

16. A process for preparing transition metal complexes according to claims 11 to 14, which comprises
either
(a) reacting optically active ligands of the general formula III or IV with metal complexes at a temperature of -80°C to +120°C using at least one solvent for 5 minutes to 72 hours; if W in the general formula III and IV is phosphinoborane, the compound of the general formula I or IV, before or after step (a), is deprotected in the presence of at least one reagent in the form of a tertiary, secondary or polymer-bound amine and of at least one solvent at a temperature of +20°C to +100°C for 1 to 200 hours,
or
(b) reacting imidazolo-containing phosphinoborane compounds of the formula I or II with metal complexes using in each case at least one strong base and an ethereal or other aprotic solvent at a temperature of -80°C to +120°C for 5 minutes to 72 hours, and therebefore or thereafter reacting them with at least one reagent in the form of a tertiary, secondary or polymer-bound amine and at least one solvent at a temperature of +20°C to +100°C for 1 to 200 hours.

17. A catalyst preparable either
(variant 1) by reacting imidazolo-containing phosphinoborane compounds of the formula I or II 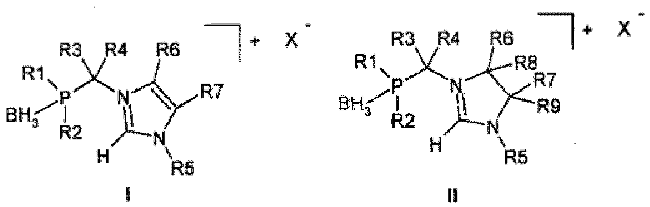 with metal complexes using in each case at least one strong base and an ethereal or other aprotic solvent at a temperature of -80°C to +120°C for 5 minutes to 72 hours,
and therebefore or thereafter reacting them with at least one reagent in the form of a tertiary, secondary or polymer-bound amine and at least one solvent at a temperature of +20°C to +100°C for 1 to 200 hours,
or
(variant 2) by reacting optically active ligands of the general formula III or IV 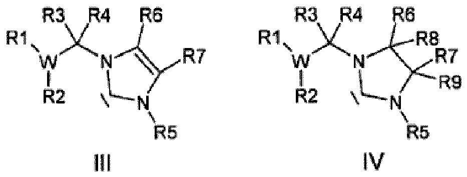 in which W is phosphinoborane,
with metal complexes at a temperature of -80°C to +120°C using at least one solvent for 5 minutes to 72 hours, where the compound of the general formula III or IV, before or after step (a), is deprotected in the presence of at least one reagent in the form of a tertiary, secondary or polymer-bound amine and of at least one solvent at a temperature of +20°C to +100°C for 1 to 200 hours
or
(variant 3) by dissolving the transition metal complexes of the formulae VII to VIII 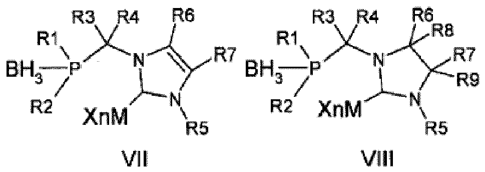 in at least one solvent.

18. The use of catalysts according to claim 17 for organic transformation reactions.

19. The use of catalysts according to claim 17 for hydrogenation, hydroboration, hydroamination, hydroamidation, hydroalkoxylation, hydrovinylation, hydroformylation, hydrocarboxylation, hydrocyanation, hydrosilylation, carbonylation, cross-coupling, allylic substitution, aldol reaction, olefin metathesis, C-H activation or polymerization.

20. The use of catalysts comprising transition metal complexes according to claim 11 for asymmetric hydrogenation of unsaturated organic compounds.

## Revendications

1. Composés de phosphinoborane contenant des groupes imidazole de formule générale I ou II : 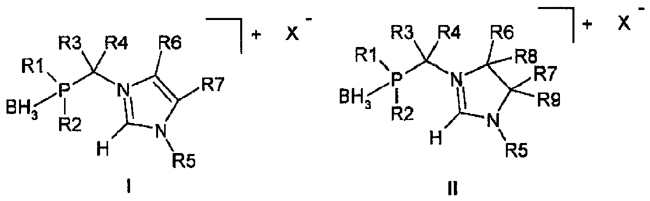 où
R1 et R2 représentent des radicaux différents et sont choisis dans le groupe constitué par alkyle et alkyle (variante α) ou
R1 et R2 représentent des radicaux différents et sont choisis dans le groupe constitué par alkyle et aryle (variante ß),
R3 et R4 représentent à chaque fois des radicaux identiques ou différents, choisis dans le groupe constitué par hydrogène, alkyle et aryle,
R5 représente alkyle ou aryle,
R6 et R7 représentent à chaque fois des radicaux identiques ou différents, choisis dans le groupe constitué par hydrogène, alkyle, aryle et un cycle aliphatique ou aromatique de 6 chaînons,
R8 et R9 représentent, indépendamment l'un de l'autre, hydrogène ou alkyle,
X représente un groupe partant choisi parmi chlore,
brome, iode, trifluoroacétyle, acétyle, benzoyle, tosyle, nosyle, triflate, nonaflate, camphre-10-sulfonate.

2. Composés de phosphinoborane contenant des groupes imidazole selon la revendication 1, où, dans le cas de la variante α :
R1 représente adamantyle, tert-butyle, sec-butyle ou isopropyle et R2 représente méthyle, éthyle, propyle, butyle, pentyle ou hexyle,
dans le cas de la variante ß :
R1 représente phényle, toluyle, xylyle, mésityle, naphtyle, fluorényle, anthracényle, et R2 représente adamantyle, tert-butyle, sec-butyle, isopropyle ou méthyle,
R3 et R4 représentent, indépendamment l'un de l'autre, hydrogène, méthyle, éthyle ou benzyle,
R5 représente méthyle, éthyle, isopropyle, tert-butyle, adamantyle, mésityle, phényle, toluyle, xylyle, naphtyle, fluorényle ou anthracényle,
R6 et R7 représentent, indépendamment l'un de l'autre, hydrogène ou un cycle aromatique de 6 chaînons,
R8 et R9 représentent, indépendamment l'un de l'autre, hydrogène, alkyle ou aryle,
X représente un groupe partant choisi parmi chlore, brome, iode, trifluoroacétyle, acétyle, benzoyle, tosyle, nosyle, triflate, nonaflate, camphre-10-sulfonate.

3. Composés de phosphinoborane contenant des groupes imidazole selon la revendication 1, où dans le cas de la variante α :
R1 représente tert-butyle et R2 représente méthyle ou éthyle,
dans le cas de la variante ß :
R1 représente phényle et R2 représente tert-butyle ou méthyle,
R3 et R4 représentent hydrogène,
R5 représente méthyle, isopropyle, tert-butyle, adamantyle ou mésityle,
R6 et R7 représentent, indépendamment l'un de l'autre, hydrogène ou un cycle aromatique de 6 chaînons,
R8 et R9 représentent, indépendamment l'un de l'autre, hydrogène, phényle ou une chaîne (CH₂)₄,
X représente un groupe partant choisi parmi chlore, brome, iode, trifluoroacétyle, acétyle, benzoyle, tosyle, nosyle, triflate, nonaflate, camphre-10-sulfonate.

4. Procédé pour la préparation de composés de phosphinoborane contenant des groupes imidazole de formule générale I ou II, 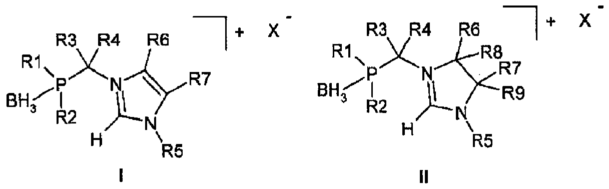 **caractérisé en ce que** des composés de formule générale A 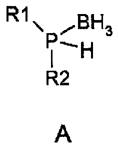 sont transformés avec des composés de formule générale B ou C 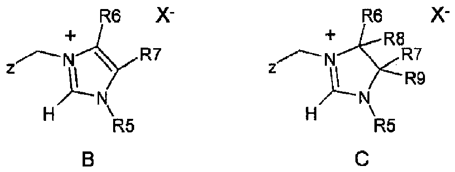 à une température de -80°C à 40°C en présence d'au moins une base contenant des ions de lithium en utilisant un ou plusieurs solvants.

5. Procédé pour la préparation de composés de phosphinoborane optiquement actifs contenant des groupes imidazole de formule générale I ou II, 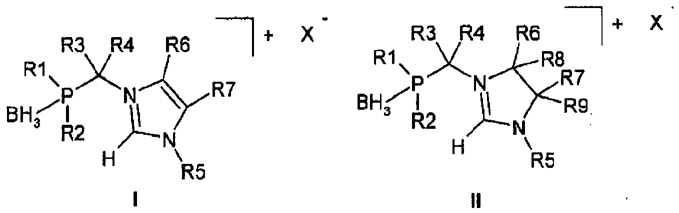 **caractérisé en ce que** des composés de formule générale A 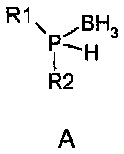 sont transformés avec des composés de formule générale B ou C 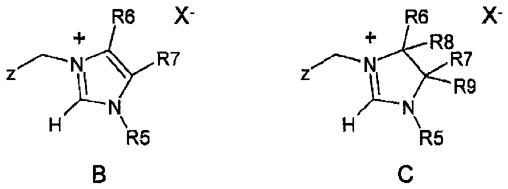 à une température de -80°C à 40°C en présence d'au moins une base contenant des ions de lithium et d'au moins un auxiliaire chiral en utilisant un ou plusieurs solvants.

6. Procédé selon la revendication 5, **caractérisé en ce qu'**on transforme le composé de formule générale A avec au moins un auxiliaire chiral et au moins une base à des températures entre -80°C et 0°C dans au moins un solvant, puis on amène et on maintient pendant 0,5 à 4 heures à une température entre 10°C et 40°C, ensuite, on transforme le mélange obtenu avec le composé de formule générale B ou C à des températures de -80°C à 40°C.

7. Ligand optiquement actif de formule générale V : 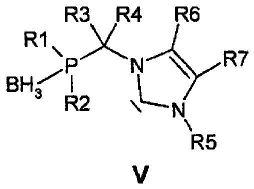 où
R1 et R2 représentent des radicaux différents et sont choisis dans le groupe constitué par alkyle et alkyle (variante α) ou
R1 et R2 représentent des radicaux différents et sont choisis dans le groupe constitué par alkyle et aryle (variante ß),
R3 et R4 représentent à chaque fois des radicaux identiques ou différents, choisis dans le groupe constitué par hydrogène, alkyle et aryle,
R5 représente alkyle ou aryle,
R6 et R7 représentent à chaque fois des radicaux identiques ou différents, choisis dans le groupe constitué par hydrogène, alkyle, aryle et un cycle aliphatique ou aromatique de 6 chaînons.

8. Ligand optiquement actif selon la revendication 7, où
dans le cas de la variante α :
R1 représente adamantyle, tert-butyle, sec-butyle ou isopropyle et R2 représente méthyle, éthyle, propyle, butyle, pentyle ou hexyle,
dans le cas de la variante ß :
R1 représente phényle, toluyle, xylyle, mésityle, naphtyle, fluorényle, anthracényle, et R2 représente adamantyle, tert-butyle, sec-butyle, isopropyle ou méthyle,
R3 et R4 représentent, indépendamment l'un de l'autre, hydrogène, méthyle, éthyle ou benzyle,
R5 représente méthyle, éthyle, isopropyle, tert-butyle, adamantyle, mésityle, phényle, toluyle, xylyle, naphtyle, fluorényle ou anthracényle,
R6 et R7 représentent, indépendamment l'un de l'autre, hydrogène ou un cycle aromatique de 6 chaînons.

9. Ligand optiquement actif selon la revendication 7, où
dans le cas de la variante α :
R1 représente tert-butyle et R2 représente méthyle ou éthyle,
dans le cas de la variante ß :
R1 représente phényle et R2 représente tert-butyle ou méthyle,
R3 et R4 représentent hydrogène,
R5 représente méthyle, isopropyle, tert-butyle, adamantyle ou mésityle,
R6 et R7 représentent, indépendamment l'un de l'autre, hydrogène ou un cycle aromatique de 6 chaînons.

10. Procédé pour la préparation de composés de formule générale III ou IV, 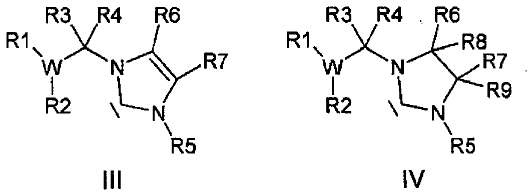 **caractérisé en ce qu'**on transforme des composés de formule générale I ou II 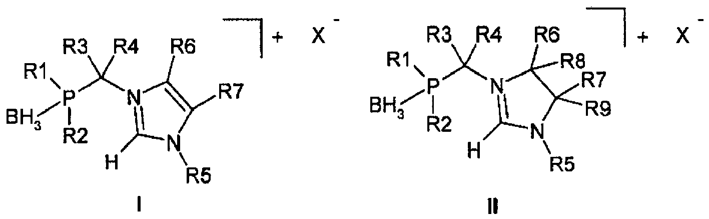 en utilisant à chaque fois au moins une base forte et un solvant de type éther ou un autre solvant aprotique à une température de -80 à +20°C en composés de formule générale III ou IV (étape (ii)), si W dans la formule générale III ou IV représente phosphore, on déprotège le composé de formule générale I ou II avant ou après l'étape (ii) en présence d'au moins un réactif sous forme (a) d'une amine tertiaire ou secondaire ou (b) d'une amine liée à un polymère et d'au moins un solvant à une température de +20°C à +100°C pendant 1 à 200 heures ; si le composé de formule générale I ou II est déprotégé avant l'étape (i), on peut utiliser en outre comme réactif (c) un acide non coordinant (étape (i)).

11. Complexes de métal de transition, contenant comme ligands au moins un composé de formule générale V ou VI 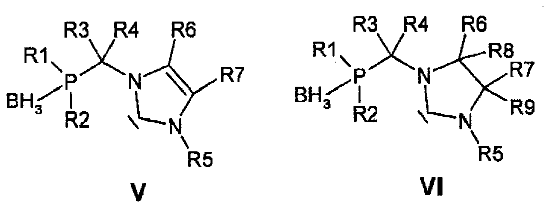 où
R1 et R2 représentent des radicaux différents et sont choisis dans le groupe constitué par alkyle et alkyle (variante α) ou
R1 et R2 représentent des radicaux différents et sont choisis dans le groupe constitué par alkyle et aryle (variante ß),
R3 et R4 représentent à chaque fois des radicaux identiques ou différents, choisis dans le groupe constitué par hydrogène, alkyle et aryle,
R5 représente alkyle ou aryle,
R6 et R7 représentent à chaque fois des radicaux identiques ou différents, choisis dans le groupe constitué par hydrogène, alkyle, aryle et un cycle aliphatique ou aromatique de 6 chaînons,
R8 et R9 représentent, indépendamment l'un de l'autre, hydrogène ou alkyle.

12. Complexes de métal de transition selon la revendication 11, où
dans le cas de la variante α :
R1 représente adamantyle, tert-butyle, sec-butyle ou isopropyle et R2 représente méthyle, éthyle, propyle, butyle, pentyle ou hexyle,
dans le cas de la variante ß :
R1 représente phényle, toluyle, xylyle, mésityle, naphtyle, fluorényle, anthracényle, et R2 représente adamantyle, tert-butyle, sec-butyle, isopropyle ou méthyle,
R3 et R4 représentent, indépendamment l'un de l'autre, hydrogène, méthyle, éthyle ou benzyle,
R5 représente méthyle, éthyle, isopropyle, tert-butyle, adamantyle, mésityle, phényle, toluyle, xylyle, naphtyle, fluorényle ou anthracényle,
R6 et R7 représentent, indépendamment l'un de l'autre, hydrogène ou un cycle aromatique de 6 chaînons.
R8 et R9 représentent, indépendamment l'un de l'autre, hydrogène, alkyle ou aryle.

13. Complexes de métal de transition selon la revendication 11, où
dans le cas de la variante α :
R1 représente tert-butyle et R2 représente méthyle ou éthyle,
dans le cas de la variante ß :
R1 représente phényle et R2 représente tert-butyle ou méthyle,
R3 et R4 représentent hydrogène,
R5 représente méthyle, isopropyle, tert-butyle, adamantyle ou mésityle,
R6 et R7 représentent, indépendamment l'un de l'autre, hydrogène ou un cycle aromatique de 6 chaînons,
R8 et R9 représentent, indépendamment l'un de l'autre, hydrogène, phényle ou une chaîne (CH₂)₄.

14. Complexe de métal de transition selon les revendications 11 à 13, contenant comme ligands le 1-((tert-butyl(méthyl)phosphinoborane)méthyl)-3-mésitylimidazol-2-ylidène, le 3-tert-butyl-1-((tert-butyl(méthyl)phosphinoborane)méthyl)imidazol-2-ylidène, le 3-adamantyl-1-((tert-butyl(méthyl)phosphinoborane)méthyl)-imidazol-2-ylidène, le 1-((tert-butyl(phényl)phosphinoborane)méthyl)-3-mésitylimidazol-2-ylidène, le 3-tert-butyl-1-((tert-butyl(phényl)phosphinoborane)méthyl)-imidazol-2-ylidène, le 3-adamantyl-1-((tert-butyl(phényl)phosphinoborane)méthyl)-imidazol-2-ylidène.

15. Complexe de métal de transition selon les revendications 11 à 14, en utilisant, comme métaux de transition, Ru, Fe, Co, Rh, Ir, Ni, Pd, Pt, Ag, Cu ou Au.

16. Procédé pour la préparation de complexes de métal de transition selon les revendications 11 à 14, **caractérisé en ce que** soit
(a) on transforme des ligands optiquement actifs de formule générale III ou IV avec des complexes métalliques, à une température de -80°C à +120°C, en utilisant au moins un solvant pendant 5 minutes à 72 heures, si W représente phosphinoborane dans les formules générales III ou IV, on déprotège le composé de formule générale III ou IV avant ou après l'étape (a) en présence d'au moins un réactif sous forme d'une amine tertiaire, secondaire ou liée à un polymère et d' au moins un solvant à une température +20°C à +100°C pendant 1 à 200 heures, soit
(b) on transforme des composés de phosphinoborane contenant des groupes imidazole de formule I ou II avec des complexes métalliques en utilisant à chaque fois une base forte et un solvant de type éther ou un autre solvant aprotique à une température de -80°C à +120°C pendant 5 minutes à 72 heures, et on transforme, avant ou après, avec au moins un réactif sous forme d'une amine tertiaire, secondaire ou liée à un polymère et d'au moins un solvant à une température de +20°C à +100°C pendant 1 à 200 heures.

17. Catalyseurs, pouvant être préparés, soit
(Variante 1) par transformation de composés de phosphinoborane contenant des groupes imidazole de formule I ou II 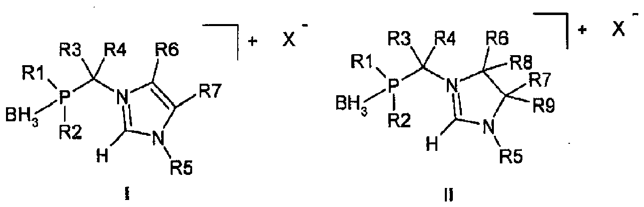 avec des complexes métalliques en utilisant à chaque fois une base forte et un solvant de type éther ou un autre solvant aprotique à une température de -80°C à +120°C pendant 5 minutes à 72 heures,
et on transforme, avant ou après, avec au moins un réactif sous forme d'une amine tertiaire, secondaire ou liée à un polymère et d' au moins un solvant à une température de +20°C à +100°C pendant 1 à 200 heures,
(Variante 2) par transformation de ligands optiquement actifs de formule générale III ou IV 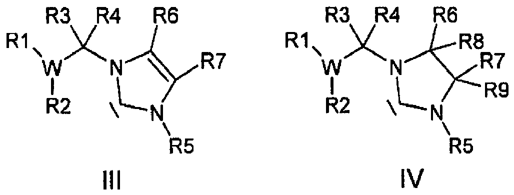 où W représente du phosphinoborane,
avec des complexes métalliques, à une température de -80°C à +120°C, en utilisant au moins un solvant pendant 5 minutes à 72 heures, le composé de formule générale III ou IV étant déprotégé avant ou après l'étape (a) en présence d'au moins un réactif sous forme d'une amine tertiaire, secondaire ou liée à un polymère et d' au moins un solvant à une température +20°C à +100°C pendant 1 à 200 heures, ou
(Variante 3) par dissolution des complexes de métal de transition de formule VII à VIII 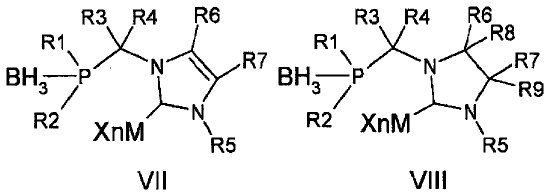 dans au moins un solvant.

18. Utilisation de catalyseurs selon la revendication 17 pour des réactions de transformation organiques.

19. Utilisation de catalyseurs selon la revendication 17 pour l'hydrogénation, l'hydroboration, l'hydroamination, l'hydroamidation, l'hydroalcoxylation, l'hydrovinylation, l'hydroformylation, l'hydrocarboxylation, l'hydrocyanation, l'hydrosilylation, la carbonylation, le couplage croisé, la substitution allylique, la réaction aldol, une métathèse d'oléfines, l'activation de CH ou la polymérisation.

20. Utilisation de catalyseurs contenant des complexes de métal de transition selon la revendication 11 pour l'hydrogénation asymétrique de composés organiques insaturés.
